# EUROPÄISCHE PATENTSCHRIFT

(11) **EP 2 617 639 B1**
(45) Veröffentlichungstag und Bekanntmachung des Hinweises auf die Patenterteilung: **17.08.2016**
(21) Anmeldenummer: 13000074.8
(22) Anmeldetag: 09.01.2013
(51) Int. Cl.: B62M 11/16, B62M 11/18

(54) **Fahrradgetriebe, insbesondere in Form einer Mehrgang-Getriebenabe**
Bicycle gear, especially in the form of a multiple gear hub
Engrenage de vélo, en particulier sous forme d'un moyeu à vitesses multiples

(30) Priorität: 20.01.2012 DE 102012200829
(43) Veröffentlichungstag der Anmeldung: 24.07.2013
(73) Patentinhaber: SRAM Deutschland GmbH, 97424 Schweinfurt (DE)
(72) Erfinder: Göbel, Joachim, 97279 Prosselsheim (DE); Wolfram, Frank, 96052 Bamberg (DE)

(56) Entgegenhaltungen:
- EP-A2- 2 020 374
- CH-A- 223 192
- US-A- 4 147 244

## Beschreibung

Die Erfindung betrifft ein Fahrradgetriebe, umfassend:
- eine Eingangsseite, an der ein auf einem Pedalieren beruhendes Eingangsdrehmoment in das Fahrradgetriebe einleitbar ist, wahlweise als in eine Antriebsrichtung wirkendes Eingangs-Antriebsdrehmoment oder als in eine Bremsrichtung wirkendes Eingangs-Bremsdrehmoment;
- eine Ausgangsseite, an der ein auf dem Eingangs-Antriebsdrehmoment beruhendes Ausgangs-Antriebsdrehmoment zur Übertragung auf ein antreibbares Laufrad eines Fahrrads bereitstellbar ist;
- eine der Ausgangsseite zugeordnete Bremseinrichtung, die auf Basis des Eingangs-Bremsdrehmoments in einen von dem Eingangs-Bremsdrehmoment abhängigen Bremseingriff bringbar ist, um über die Ausgangsseite ein von dem Eingangs-Bremsdrehmoment abhängiges Bremsdrehmoment zum Bremsen des antreibbaren Laufrads bereitzustellen;
- eine mehrere Drehmomentübertragungswege unterschiedlicher Übersetzung oder Untersetzung zwischen der Eingangsseite einerseits und der Ausgangsseite und der Bremseinrichtung andererseits bereitstellende, vorzugsweise wenigstens ein Planetengetriebe umfassende Getriebeanordnung;
wobei wenigstens ein die Eingangsseite mit der Ausgangsseite verbindender Drehmomentübertragungsweg über wenigstens eine Klinke verläuft,
- die für die Drehmomentübertragung über diesen Drehmomentübertragungsweg in eine eine Drehmomentübertragung zwischen einer die Klinke tragenden, drehbar gelagerten ersten Komponente des Fahrradgetriebes und einer zugeordneten, drehbar gelagerten zweiten Komponente des Fahrradgetriebes ermöglichende Eingriffsstellung zur Herstellung einer Drehmitnahmeverbindung durch Eingriff mit einer zugeordneten Eingriffsformation der zweiten Komponente bringbar ist und
- die für eine Drehmomentübertragung über wenigstens einen anderen Drehmomentmomentübertragungsweg auf Grundlage des an der Eingangseite zur Übertragung über den anderen Drehmomentübertragungsweg eingeleiteten Eingangsdrehmoments aus der Eingriffsstellung entfernbar ist, um eine relative Verdrehung der beiden Komponenten zumindest in einer bei einer Drehmomentübertragung über den anderen Drehmomentübertragungsweg auftretenden Relativdrehrichtung zuzulassen.

Auch wenn andere Konstruktionen durchaus in Betracht kommen, sind derartige Fahrradgetriebe in der Regel als Mehrgang-Getriebenaben ausgeführt, die einen drehbar an einer Nabenachse gelagerten Antreiber und eine drehbar an der Nabenachse gelagerte Nabenhülse aufweisen. Der Antreiber dient als Eingangsseite und die Nabenhülse dient als Ausgangsseite. Es könnten dann zweckmäßig der Antreiber die erste Komponente bilden und ein Getriebeelement der Getriebeanordnung, beispielsweise ein Hohlrad eines Planetengetriebes der Getriebeanordnung, die zweite Komponente bilden. Es sind aber auch andere Zuordnungen der Klinke zu Komponenten einer solchen Mehrgang-Getriebenabe denkbar. Beispielsweise könnten ein Hohlrad eines Planetengetriebes der Getriebeanordnung die erste Komponente und die Nabenhülse die zweite Komponente bilden.

Fahrradgetriebe der angesprochenen Art, die als Mehrgang-Getriebenabe ausgeführt sind, sind in vielfältigen Ausgestaltungen bekannt. Es wird auf die US 3,432,013, die DE 38 19 065 A1 (und die entsprechende GB 2 207 966 A), die EP 0 383 350 A2, die US 3,608, 683 und die DE 41 42 867 A1 verwiesen. Die EP 2 327 617 A2 zeigt eine Mehrgang-Getriebenabe für Fahrräder, die einem Fahrradgetriebe der angesprochenen Art entspräche, wenn eine Antreiber-Freilaufkupplung (11) zwischen einem Antreiber (1) und einem Hohlrad (3) einer ersten Getriebestufe (I) als Klinken-Freilaufkupplung realisiert wäre, wie dies in der Praxis als besonders zweckmäßig in Betracht kommt.

Häufig ist bei solch einem Fahradgetriebe der Klinke eine relativ zur ersten Komponente verstellbare dritte Komponente des Fahrradgetriebes zugeordnet, die derart mit der Klinke wechselwirkt,
- dass in einer im Folgenden als Aktivierungsstellung bezeichnet ersten Stellung der dritten Komponente relativ zur ersten Komponente die Klinke die Eingriffsstellung einnimmt oder zumindest in Richtung einer Einnahme der Eingriffsstellung vorgespannt ist, und
- dass die Klinke auf Grundlage einer Verstellung der dritten Komponente aus der Aktivierungsstellung in eine im Folgenden als Deaktivierungsstellung bezeichnete zweite Stellung relativ zur ersten Komponente aus der Eingriffsstellung entfernbar ist.

So ist nach US 3,432,013 als dritte Komponente in diesem Sinne eine Steuerhülse vorgesehen, die beim Bremsen zwei Antriebsklinken gegen Rückstellkräfte einer Feder aus der Eingriffsstellung entfernt, so dass nun über Bremsklinken Drehmoment zur Bremseinrichtung übertragen werden kann, ohne dass es zu einer Verspannung des Getriebes kommt und eine unbedingt zu vermeidende, als "Brake Lock" bekannte Situation eintritt, bei der die Bremseinrichtung eingerückt ist, aber nicht mehr ausrückbar ist, da das zum Ausrücken der Bremseinrichtung nötige Vorwärtspedalieren durch die in der Eingriffsstellung befindlichen, an der zugeordneten Eingriffsformation anschlagenden Antriebsklinken verhindert wird. Derartige Ausgestaltungen sind auch aus der DE 38 19 065 A1 (bzw. der entsprechenden GB 2 207 966 A), der EP 0 383 350 A2 und der DE 41 42 867 A1 bekannt. Auch die US 3,608 683 zeigt eine einschlägige Konstruktion.

Es ist bekannt, Freiläufe bzw. Ein-Weg-Kupplungen unter Verwendung von Rollelementen zu realisieren, die zur Übertragung von Drehmoment zwischen einer Eingriffsoberfläche einer ersten Komponente und einer Nockenfläche einer zweiten Komponente eingeklemmt werden, wie beispielsweise gemäß EP 0 679 970 B2 realisiert.

Es ist aus der DE 44 02 344 C1 bekannt, eine Klinke mittels eines Nockenelements 7 gegen die Kraft einer die Klinke in Richtung zu ihrer Eingriffsstellung vorspannende Feder aus einer Eingriffsstellung zu entfernen. Bei der bekannten Lösung nach DE 44 02 344 C1 dient die Klinke zur drehfesten Koppelung eines Ringkörpers mit einer Nabenachse, und das die Klinke aushebende Nockenelement ist von einem koaxial zur Nabenachse verschiebbaren Steuerschieber gebildet.

Die DE 42 29 023 C2 beschreibt eine Lösung, bei der zwei Klinkensätze wechselseitig aktivierbar und deaktivierbar sind, mittels einer axial verschiebbaren Steuerscheibe, die in einer ersten Axialposition die Klinken eines ersten Klinkensatzes in ihrer Eingriffsstellung hält und das Entfernen der Klinken eines zweiten Klinkensatzes aus der Eingriffsstellung freigibt und die in einer zweiten Axialposition die Klinken des zweiten Klinkensatzes in ihrer Eingriffsstellung hält und das Entfernen der Klinken des ersten Klinkensatzes aus der Eingriffsstellung freigibt. Die Klinken sind jeweils durch eine Klinkenfeder in Richtung der Einnahme einer Freigabestellung vorgespannt, in der die Klinken nicht mit einer zugeordneten Eingriffsformation eingreifen. Bei der Drehmomentübertragung auftretende Kräfte wirken im Sinne der Aussteuerung der Klinken. Die Steuerscheibe ist durch von außen in die Mehrgangnabe eingeleitete Schaltkräfte mittels eines Schubklotzen axial verstellbar, um vermittels der angesprochenen wechselseitigen Aktivierung und Deaktivierung der beiden Klirtkensätze zwischen mindestens zwei Gängen der Mehrgangnabe umzuschalten.

Aus der EP 2 112 062 A1 ist die Verwendung einer so genannten "negativ vorgespannten Klinke" in einem Planetengetriebe eines Fahrradgetriebes bekannt, die von einem stationären Trägerelement getragen ist und zum wahlweisen Freigeben oder alternativ Blockieren eines Sonnenrads und Bereitstellung einer Freilauffunktion für das blockierte Sonnenrad dient. Die federvorgespannte Klinke ist durch ein über einen kleinen Drehwinkel relativ zum Trägerelement drehbares Nockenelement zwischen zwei Zuständen umschaltbar. In einem ersten Zustand ermöglicht die Klinke beliebige Drehungen des Sonnenrads relativ zum Trägerelement, also Drehungen in beide möglichen Drehrichtungen. In einem zweiten Zustand verhindert die Klinke eine Drehung des Sonnenrads in einer ersten Drehrichtung relativ zum Trägerteil, aber ermöglicht eine Drehung des Sonnenrads in einer zur ersten Drehrichtung entgegengesetzten zweiten Drehrichtung relativ zum Trägerteil. Zur Realisierung dieser Funktionen ist die Klinke in Abhängigkeit von der Stellung des Nockenelements einerseits um eine erste Schwenkachse schwenkbar, in eine dem ersten Zustand entsprechende Stellung, sowie andererseits um eine zweite Schwenkachse schwenkbar, um eine dem zweiten Zustand entsprechende Freilauffunktion zu realisieren.

Dokument US 4 147 244 offenbart die Präambel des Anspruchs 1.

Es ist eine Aufgabe der vorliegenden Erfindung, ein die angesprochene dritte Komponente aufweisendes Fahrradgetriebe der angegebenen Art bereitzustellen, bei dem die wenigstens eine Klinke, über die wenigstens ein die Eingangsseite mit der Ausgangsseite verbindender Drehmomentübertragungsweg verläuft, mit hoher Betriebssicherheit auf Grundlage eines an der Eingangsseite zur Übertragung über den wenigstens einen anderen Drehmomentübertragungsweg eingeleiteten Eingangsdrehmoments aus der Eingriffsstellung entfernbar ist, ohne dass Verspannungen im Getriebe auftreten bzw. ohne dass im Falle eines Bremsens ein so genannter "Brake Lock" auftritt.

Zur Lösung dieser Aufgabe wird vorgeschlagen, dass die dritte Komponente eine Nockenfläche aufweist, die mit einem Nockenfolgerabschnitt der Klinke derart zusammenwirkt,
- dass bei einer Bewegung der dritten Komponente aus der Aktivierungstellung in die Deaktivierungsstellung die Nockenfläche sich so relativ zum Nockenfolgerabschnitt bewegt, dass das Entfernen der Klinke aus der Eingriffsstellung freigegeben wird, und
- dass bei einer Bewegung der dritten Komponente aus der Deaktivierungsstellung in die Aktivierungsstellung durch das Zusammenwirken der Nockenfläche mit dem Nockenfolgerabschnitt die Klinke zwangsbewegt wird, um in der Aktivierungsstellung der dritten Komponente die Eingriffsstellung einzunehmen oder zumindest in Richtung einer Einnahme der Eingriffsstellung vorgespannt zu sein.

Es wird vor allem daran gedacht, dass die dritte Komponente an der ersten Komponente zur gemeinsamen Drehung gelagert ist und dass die dritte Komponente relativ zur ersten Komponente verdrehbar ist, vorzugsweise über einen beispielsweise durch Anschläge definierten begrenzten Drehwinkelbereich. Der Schaltmechanismus des Fahrradgetriebes kann dann rein rotatorisch funktionieren, was vorteilhaft ist. Komplexe Mechanismen zur Ermöglichung etwa eines axialen Abweisens können entfallen.

Bevorzugt ist vorgesehen, dass die dritte Komponente durch eine Federanordnung in Richtung zur Aktivierungsstellung vorgespannt ist. Auf Basis dieses Weiterbildungsvorschlags kann vorteilhaft und einfach erreicht werden, dass nach Beendigung der Drehmomentübertragung über den anderen Drehmomentübertragungsweg die Klinke wieder ihre Eingriffsstellung einnimmt, damit über den über die Klinke verlaufenden Drehmomentübertragungsweg Antriebsdrehmoment zur Eingangsseite übertragen werden kann. Es ist durchaus aber auch denkbar, dass die dritte Komponente auf Grundlage eines an der Eingangsseite zur Übertragung über den über die Klinke verlaufenden Drehmomentübertragungsweg eingeleiteten Eingangsdrehmoments in die Aktivierungsstellung verstellbar ist, ggf. unterstützt durch eine die dritte Komponente in Richtung zur Aktivierungsstellung vorspannenden Federanordnung. Es ist aber nicht zwingend, eine Federanordnung vorzusehen, wenn die dritte Komponente auf Grundlage des an der Eingangsseite eingeleiteten Eingangsdrehmoments aus der Deaktivierungsstellung in die Aktivierungsstellung bringbar ist.

Für die Klinke wird weiterbildend vorgeschlagen, dass die Klinke in der Aktivierungsstellung der dritten Komponente um eine von dem Nockenfolgerabschnitt definierte erste Schwenkachse schwenkbar ist und in der Deaktivierungsstellung der dritten Komponente um eine zweite Schwenkachse schwenkbar ist, die von einem von dem Nockenfolgerabschnitt beabstandeten Klinkenabschnitt definiert ist, etwa von einem Klinkenendabschnitt, der zu einem zum Eingreifen mit der Eingriffsformation dienenden Eingriffsabschnitt entgegengesetzt ist. Dabei kann die Klinke um die zweite Schwenkachse schwenkbar sein, wenn die dritte Komponente die Deaktivierungsstellung einnimmt, und kann die Klinke um die erste Schwenkachse schwenkbar sein, wenn die dritte Komponente die Aktivierungsstellung einnimmt. Zweckmäßig kann man eine der Klinke zugeordnete, auf diese wirkende Federanordnung vorsehen, die die Klinke in der Aktivierungsstellung der dritten Komponente im Sinne eines Schwenkens um die erste Schwenkachse in Richtung zur Eingriffsstellung vorspannt und die die Klinke in der Deaktivierungsstellung der dritten Komponente im Sinne eines Schwenkens um die zweite Schwenkachse in Richtung einer Stellung außer Eingriff mit der zugeordneten Eingriffsformation vorspannt.

Die Klinke kann vorteilhaft mittels der dritten Komponente zwischen einer Wirkungsweise als Freilaufklinke, die in Richtung einer Einnahme der Eingriffsstellung vorgespannt ist, und einer Wirkungsweise als in Richtung einer/der Stellung außer Eingriff mit der zugeordneten Eingriffsformation vorgespannte Klinke umschaltbar sein.

Allgemein wird daran gedacht, dass eine/die auf die Klinke wirkende Federanordung zumindest in der Deaktivierungsstellung der dritten Komponente die Klinke in Richtung einer Einnahme einer Freigabestellung vorspannt, in der die Klinke nicht mit der Eingriffsformation eingreift.

Ferner wird allgemein daran gedacht, dass eine/die auf die Klinke wirkende Federanordnung zumindest in der Aktivierungsstellung der dritten Komponente die Klinke in Richtung einer Einnahme der Eingriffsstellung vorspannt.

Mittels der erfindungsgemäßen Klinke lassen sich verschiedene wichtige Funktionen eines Fahrradgetriebes sehr vorteilhaft realisieren.

So kann man vorsehen, dass zumindest für wenigstens einen bestimmten momentanen Getriebezustand, bei dem die dritte Komponente die Aktivierungsstellung einnimmt, die Klinke infolge einer Drehmomentübertragung über wenigstens einen anderen Drehmomentübertragungsweg (im Folgenden auch als anderer Drehmomentübertragungsweg erster Art angesprochen) aufgrund einer Wechselwirkung mit der zugeordneten Eingriffsformation in eine Überlaufstellung, in der die Klinke nicht mit der Eingriffsformation drehgekoppelt eingreift, bewegbar ist, um eine relative Verdrehung der beiden Komponenten zumindest in einer bei einer Drehmomentübertragung über diesen anderen Drehmomentübertragungsweg auftretenden Relativdrehrichtung zuzulassen. Verspannungen im Getriebe lassen sich so zuverlässig vermeiden.

Der andere Drehmomentübertragungsweg (hier auch als anderer Drehmomentübertragungsweg erster Art angesprochen) kann die Eingangsseite mit der Bremseinrichtung verbinden, zur Bereitstellung des von dem Eingangs-Bremsdrehmoment abhängigen Bremsdrehmoments zum Bremsen des antreibbaren Laufrads über die Ausgangsseite. Die Klinke kann hierzu vorteilhaft für die Drehmomentübertragung über den anderen Drehmomentübertragungsweg erster Art auf Grundlage eines an der Eingangsseite eingeleiteten Eingangs-Bremsdrehmoments aus der Eingriffsstellung entfembar sein.

Als besonders bevorzugt wird vorgeschlagen, dass die dritte Komponente auf Grundlage des Eingangs-Bremsdrehmoments aus der Aktivierungsstellung in die Deaktivierungsstellung verstellbar ist oder/und dass die dritte Komponente auf Grundlage eines an der Eingangseite eingeleiteten Eingangs-Antriebsdrehmoments aus der Deaktivierungsstellung in die Aktivierungsstellung verstellbar ist (wie oben schon angesprochen).

Ferner kann man vorteilhaft vorsehen, dass die Klinke auf Grundlage eines an der Ausgangsseite in das Fahrradgetriebe eingeleiteten, einem Rückwärtsschieben des Fahrrads entsprechenden Drehmoments aus der Eingriffsstellung entfernbar ist. Dabei kann die dritte Komponente auf Grundlage an der Ausgangsseite das Fahrradgetriebe eingeleiteten, einem Rückwärtsschieben des Fahrrads entsprechenden Drehmoments aus der Aktivierungsstellung in die Deaktivierungsstellung verstellbar sein.

Eine besonders hohe Betriebssicherheit wird erreicht, wenn zumindest in der Deaktivierungsstellung der dritten Komponente eine Wechselwirkung der Klinke mit der zugeordneten Eingriffsformation
a) in Folge einer Drehmomentübertragung über den anderen Drehmomentübertragungsweg (hier auch als anderer Drehmomentübertragungsweg erster Art angesprochen)
   oder/und
b) in Folge einer Einleitung eines einem Rückwärtsschieben des Fahrrads entsprechenden Drehmoments an der Ausgangsseite in das Fahrradgetriebe
auf die Klinke im Sinne einer Abweisung der Klinke aus der Eingriffsstellung wirkt.

Man kann vorsehen, dass alle die Eingangsseite mit der Ausgangsseite verbindende Drehmomentübertragungswege über die wenigstens eine erfindungsgemäße Klinke verlaufen, so dass die Klinke in allen Getriebegängen drehmomentübertragend ist, um auf Basis des Eingangs-Antriebsdrehmoments das Ausgangs-Antriebsdrehmoment bereitzustellen. Es kommt durchaus aber auch in Betracht, dass bei einem oder mehreren Getriebegängen das Drehmoment von der Eingangsseite zur Ausgangsseite über einen nicht über die erfindungsgemäße Klinke verlaufenden Drehmomentübertragungsweg übertragen wird. Man kann hierzu die Klinke zur Realisierung einer Einweg-Kupplung oder eines Freilaufs verwenden. Es wird in diesem Zusammenhang daran gedacht, dass zumindest in der Aktivierungsstellung der dritten Komponente die Klinke in Folge einer Drehmomentübertragung über wenigstens einen anderen Drehmomentübertragungsweg (im Folgenden auch als anderer Drehmomentübertragungsweg zweiter Art angesprochen) aufgrund einer Wechselwirkung mit der zugeordneten Eingriffsformation in eine Überlaufstellung, in der die Klinke nicht mit der Eingriffsformation drehkoppelnd eingreift, bewegbar ist, um eine relative Verdrehung der beiden Komponente zumindest in einer bei einer Drehmomentübertragung über diesen anderen Drehmomentübertragungsweg auftretenden Relativdrehrichtung zuzulassen.

Wie schon angesprochen, kann auch wenigstens ein anderer Drehmomentübertragungsweg bzw. der andere Drehmomentübertragungsweg (hier auch als anderer Drehmomentübertragungsweg zweiter Art angesprochen) die Eingangsseite mit der Ausgangsseite verbindet, zur Bereitstellung des Ausgangs-Antriebsdrehmoments an der Ausgangsseite auf Basis des Eingangs-Antriebsdrehmoments. Dabei kann die Klinke für die Drehmomentübertragung über den anderen Drehmomentübertragungsweg zweiter Art auf Grundlage eines an der Eingangseite eingeleiteten Eingangs-Antriebsdrehmoments vermittels einer/der Wechselwirkung mit der Eingriffsformation aus der Eingriffsstellung entfernbar sein.

Betreffend die Realisierung der Bremsfunktion wird vor allem daran gedacht, dass ein die Ausgangsseite mit der Bremseinrichtung verbindender Drehmomentübertragungsweg (hier auch als anderer Drehmomentübertragungsweg erster Art angesprochen) über wenigstens eine weitere Klinke verläuft, die für die Drehmomentübertragung über diesen Drehmomentübertragungsweg in eine eine Drehmomentübertragung zwischen einer die Klinke tragenden, drehbar gelagerten vierten Komponente des Fahrradgetriebes und einer zugeordneten, drehbar gelagerten fünften Komponente des Fahrradgetriebes ermöglichende Eingriffsstellung zur Herstellung einer Drehmitnahmeverbindung durch Eingriff mit einer zugeordneten Eingriffsformation der fünften Komponente bringbar ist. Dabei kann die weitere Klinke durch eine Federanordnung in Richtung einer Einnahme der Eingriffsstellung vorgespannt sein.

Aufgrund der erfindungsgemäßen wenigstens einen Klinke, über die der die Eingangsseite mit der Ausgangsseite verbindende Drehmomentübertragungsweg verläuft und die dementsprechend auch als "Antriebsklinke" bezeichenbar ist, kann eine aktive Aussteuerung der weiteren Klinke (auch als "Bremsklinke" bezeichenbar) entfallen, so dass die Gefahr eines Hängenbleibens der Bremsklinke bzw. Bremsklinken im Nichteingriffszustand, z. B. aufgrund von Fettverklebungen, vermieden wird. Die Bremsfunktion ist damit immer gewährleistet. Stattdessen wird die erfindungsgemäße Antnebsktinke, über die der die Eingangsseite mit der Ausgangsseite verbindende Drehmomentübertragungsweg verläuft, zum Bremsen aus der Eingriffsstellung entfernt, so dass im Falle einer Fehlfunktion, bei der die Klinke etwa aufgrund einer Fettverklebung nicht in die Eingriffsstellung zurückkehrt, das Fahrrad lediglich nicht angetrieben werden könnte. Dies ist eher hinnehmbar, da dann die Fehlfunktion sofort dem Fahrradfahrer auffällt und die wichtige Bremsfunktion nicht gefährdet ist, da die wenigstens eine Bremsklinke (typischerweise mehrere Bremsklinken) immer ungesteuert für die Übertragung des Bremsdrehmoments zur Verfügung steht.

Die weitere Klinke (Bremsklinke) kann infolge einer Drehmomentübertragung über den über die wenigstens eine Klinke verlaufenden, die Eingangsseite mit der Ausgangsseite verbindenden Drehmomentübertragungsweg aufgrund einer Wechselwirkung mit der zugeordneten Eingriffsformation in eine Überlaufstellung, in der die Klinke nicht mit der Eingriffsformation drehkoppelnd eingreift, bewegbar sein, um eine relative Verdrehung der vierten und fünften Komponente zumindest in einer bei einer Drehmomentübertragung über diesen die Eingangsseite mit der Ausgangsseite verbindenden Drehmomentübertragungsweg auftretenden Relativdrehrichtung zuzulassen. Gibt es wenigstens einen anderen Drehmomentübertragungsweg zweiter Art, der die Eingangsseite mit der Ausgangsseite verbindet, kann Entsprechendes für eine Drehmomentübertragung über diesen anderen Drehmomentübertragungsweg gelten.

Es bestehen grundsätzlich viele Möglichkeiten, wie das Fahrradgetriebe im Detail ausgeführt sein kann. Wie schon angesprochen, ist ein typisches Fahrradgetriebe als Mehrgang-Getriebenabe ausgeführt, mit einem drehbar an einer Nabenachse gelagerten Antreiber, der als Eingangsseite dient, und einer drehbar an der Nabenachse gelagerten Nabenhülse, die als Ausgangsseite dient. Dabei kann der Antreiber vorteilhaft die erste Komponente bilden und es kann ein Getriebeelement der Getriebeanordnung die zweite Komponente bilden. Es wird hierzu konkret vorgeschlagen, dass ein Hohlrad eines Planetengetriebes der Getriebeanordnung die zweite Komponente bildet.

Weiterhin wird vorgeschlagen, dass wenigstens ein zumindest bereichsweise radial innerhalb des Antreibers angeordnetes, vermittels des Antreibers drehbar an der Nabenachse gelagertes und relativ zum Antreiber zumindest über einen durch die Aktivivierungsstellung und die Deaktivierungsstellung begrenzten Drehwinkelbereich verdrehbares, vorzugsweise als Ringteil ausgeführtes, gewünschtenfalls in Bezug auf wenigstens eine Drehrichtung eine Mitnehmerfunktion erfüllendes und damit ggf. als Mitnehmer bezeichenbares Bauteil die dritte Komponente bildet. Dabei kann wenigstens eine zwischen einem Abstützelement des Antreibers und einem Abstützelement des Bauteils (bzw. des Ringteils bzw. des Mitnehmers) angeordnete Druckfeder vorgesehen sein, die das Bauteil relativ zum Antreiber in Richtung zur Aktivierungsstellung vorspannt. Die Aktivierungsstellung kann zweckmäßig durch einen Anschlag zwischen dem Antreiber und dem Bauteil definiert sein.

Weiter wird daran gedacht, dass von dem Bauteil und einem Getriebeelement der Getriebeanordnung eines die vierte Komponente und das andere die fünfte Komponente bildet. In diesem Fall kann das Bauteil zugleich einerseits die vierte bzw. die fünfte Komponente und andererseits die dritte Komponente bilden. Zweckmäßig kann ein Planetenradträger eines/des Planetengetriebes der Getriebeanordnung die vierte bzw. die fünfte Komponente bilden. Es wird vor allem daran gedacht, dass der Planetenradträger die vierte Komponente bildet und dass dementsprechend das Bauteil die fünfte Komponente und zugleich die dritte Komponente bildet. Die Drehmomentübertragung von der Eingangsseite zur Bremseinrichtung kann somit zweckmäßig über den Planetenradträger erfolgen, gewünschtenfalls über mehrere miteinander gekoppelte, gewünschtenfalls einteilig zusammenhängende Planetenradträger mehrerer hintereinander geschalteter Planetengetriebe der Getriebeanordnung. Die Mehrgang-Getriebenabe kann vorteilhaft so ausgeführt sein, wie als solches aus der EP 2 327 617 A2 bekannt.

Bevorzugt ist vorgesehen, dass zwischen dem die erste Komponente bildenden Antreiber und dem die dritte Komponente bildenden Bauteil ein derartiges Drehspiel realisiert ist, dass bei einer Rückwärtsdrehung des Antreibers die Klinke, über die der wenigstens eine die Eingangsseite mit der Ausgangsseite verbindende Drehmomentübertragungsweg verläuft, in Folge einer relativen Verdrehung des Bauteils in Richtung zur Deaktivierungsstellung aus der Eingriffsstellung entfernt oder entfernbar ist, spätestens beim Einsetzen einer Rückwärtsdrehung des die zweite Komponente bildenden Hohlrads. Die Entfernung der Klinke aus der Eingriffsstellung kann durch eine/die der Klinke zugeordnete, auf diese wirkende Federanordnung erfolgen, oder/und durch die Wirkung bzw. Mitwirkung der Eingriffsformation des Hohlrads, welche vorteilhaft entsprechende Abweisungsschrägflächen aufweisen kann.

Die Erfindung wird im Folgenden anhand eines Ausführungsbeispiels unter Bezugnahme auf die beigefügten Figuren näher erläutert.
- Fig. 1: zeigt das grundsätzliche Getriebeschema einer bevorzugten Ausführungsform der Erfindung mit neun Gangstufen.
- Fig. 2: zeigt einen Längsschnitt durch die Mittelachse der Nabenachse in einer das Getriebeschema realisierenden erfindungsgemäßen Ausführungsform einer Mehrgang-Getriebenabe.
- Fig. 3: ist eine vergrößerte Detaildarstellung eines Abschnitts der Getriebenabe der Fig. 2, in der eine erfindungsgemäße Antreiber-Freilaufkupplung zwischen einem Antreiber und einem Hohlrad einer ersten Planetengetriebestufe der Mehrgangnabe zu erkennen ist.

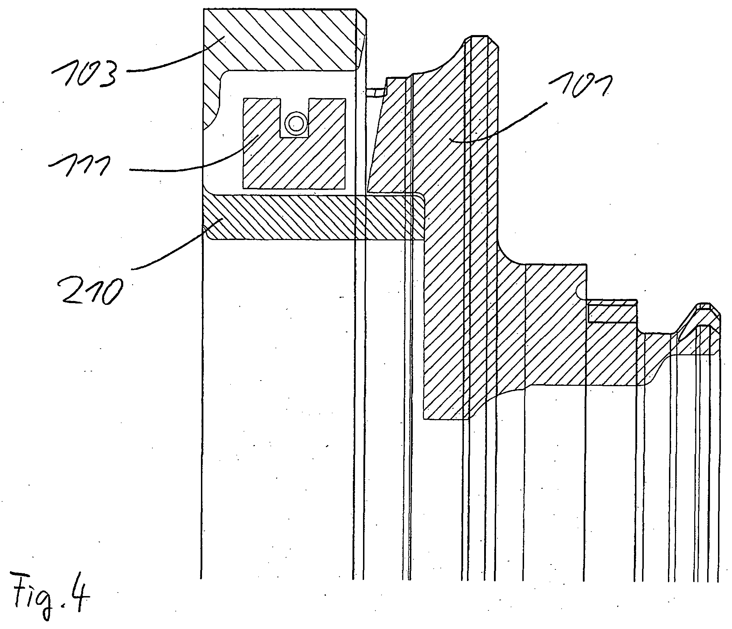

- Fig. 4: zeigt einen weiteren Längsschnitt durch den Antreiber, das Hohlrad und einer Klinke der Antreiber-Freilaufkupplung sowie ein der Klinke zugeordnetes, vermittels des Antreibers drehbar an der Nabenachse gelagertes und relativ zum Antreiber über einen Drehwinkelbereich verdrehbares Ringteil, mit der die Wirkungsweise der Klinke beeinflusst werden kann.

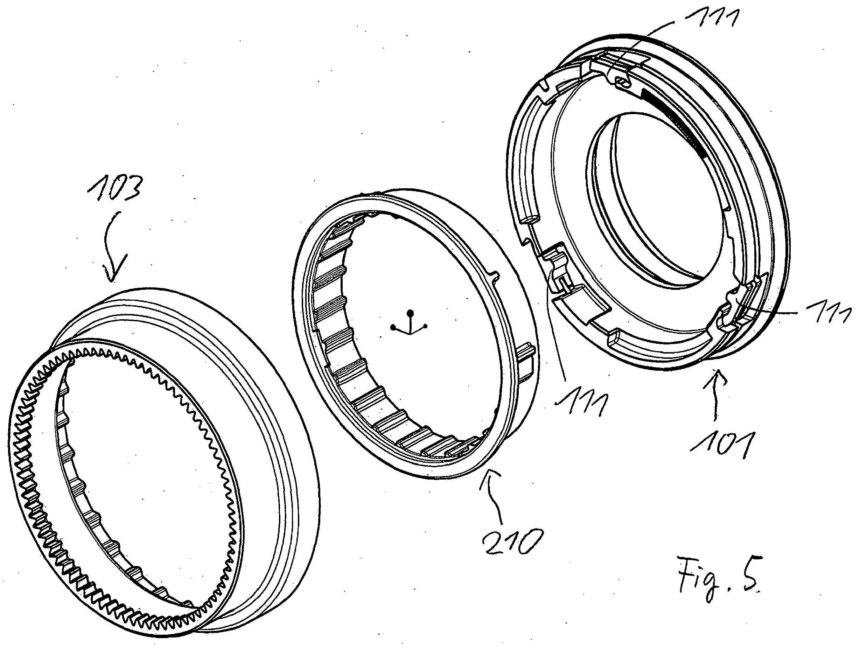

- Fig. 5: zeigt in einer perspektivischen Ansicht in der Art einer Explosionsdarstellung den mehrere Klinken tragenden Antreiber, das den Klinken zugeordnete Ringteil sowie das durch den Antreiber mittels der die Klinken umfassenen Antreiber-Freilaufkupplung antreibbare Hohlrad.
- Fig. 6: zeigt den die Klinken tragenden Antreiber in einem mit dem Ringteil axial zusammengesteckten Zustand.
- Fig. 7: zeigt den die Klinken tragenden Antreiber, das Ringteil und das geschnitten dargestellte Hohlrad in einem axial zusammengesteckten Zustand.
- Fig. 8: zeigt eine axiale Ansicht der Komponenten der Fig. 7 in diesem axial zusammengesteckten Zustand, wobei das Hohlrad geschnitten dargestellt ist gemäß einer zur Mittelachse orthogonalen Schnittebene entsprechend der Darstellung in Fig. 7.
- Fig. 9: zeigt eine axiale Schnittansicht der gesamten Getriebenabe entsprechend Fig. 8, wobei die Klinken der Antreiber-Freilaufkupplung aufgrund einer anderen Stellung des Ringteils sich in einem anderen Betriebszustand befindend als in den Darstellungen gemäß Fig. 7 und 8.

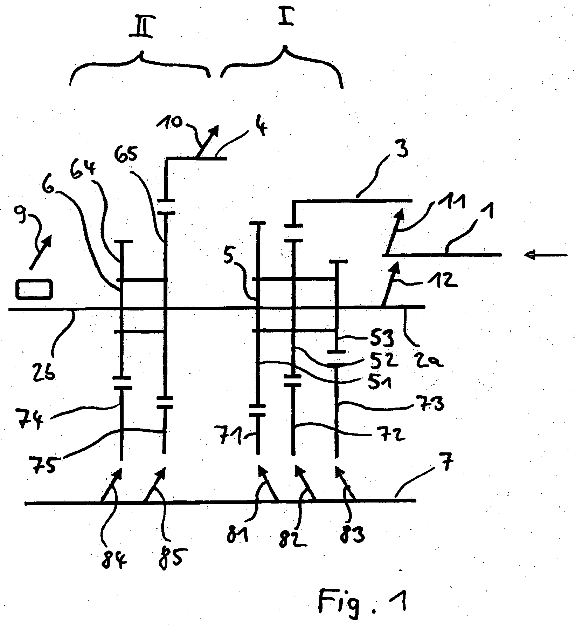

Fig. 1 zeigt eine Prinzipdarstellung einer Ausführungsform einer Getriebenabe, bei der die Erfindungs- und Weiterbildungsvorschläge vorteilhaft anwendbar sind. Schematisch dargestellt ist nur eine Hälfte der Getriebenabe oberhalb der Nabenachse 7 einschliesslich der Nabenachse 7 aber ohne die Nabenhülse.

Die Antriebsbewegung wird am Antreiber 1 eingeleitet, wobei eine Drehmitnahme bei Vorwärts-Drehbewegung durch eine Antreiberfreilaufkupplung 11 hin zum Eingang einer ersten Getriebestufe I an einem ersten Hohlrad 3 erfolgt. Eine erfindungsgemäße Ausführung der Antreiberfreilaufkupplung gemäß einem bevorzugten Ausführungsbeispiel wird unten unter Bezugnahme auf die übrigen Figuren beschrieben.

Ein erster Planetenradträger 2a trägt erste Stufenplanetenräder 5 und ein zweiter Planetenradträger 2b, der mit dem ersten Planetenradträger zur gemeinsamen Drehung gekoppelt (oder koppelbar) ist, trägt zweite Stufenplanetenräder 6. Die ersten Stufenplanetenräder 5 weisen jeweils ein erstes Planetenrad 51, ein zweites Planetenrad 52 sowie ein drittes Planetenrad 53 auf, die drehfest miteinander verbunden sind und denen ein erstes Sonnenrad 71, ein zweites Sonnenrad 72 bzw. ein drittes Sonnenrad 73 zugeordnet sind. Die Sonnenräder können gegenüber der Nabenachse 7 durch den Sonnenrädern zugeordnete Sonnenradkupplungen 81, 82, 83 drehfest gemacht werden, die als Freilaufkupplungen ausgebildet sind. Dadurch stellen sich dann entsprechende Übersetzungsverhältnisse einer ersten Getriebestufe I ein. Da in der ersten Getriebestufe I das erste Hohlrad 3 in Vorwärtsdrehrichtung angetrieben wird, müssen die Sonnenradkupplungen 81, 82, 83 die Sonnenräder gegenüber einer Drehung in Rückwärtsdrehrichtung abstützen.

Die Sonnenradkupplungen 81 und 82 sind steuerbar (schaltbar). Die Freilaufkupplung 83 am grössten Sonnenrad 73 muss nicht geschaltet werden, da sie automatisch überlaufen wird, wenn eine Sonnenradkupplung 81, 82 eines kleineren Sonnenrades 71, 72 dieses Sonnenrad 71, 72 drehfest zur Nabenachse 7 macht wird. In der ersten Getriebestufe I, die als Unterdrive-Getriebestufe wirkt, wird keine 1:1-Übersetzung genutzt, so dass immer eine Getriebestufe wirksam sein muss und dementsprechend in allen Schaltzuständen mindestens ein Sonnenrad drehfest zur Nabenachse 7 sein muß, bei der gezeigten Konstruktion zumindest das grösste Sonnenrad 81.

Eine als Overdrive-Getriebstufe wirkende zweite Getriebestufe II mit dem Planetenradträger 2b, den zweiten Stufenplanetenrädem 6, Sonnenrädern 74, 75 und einem zweiten Hohlrad 4 ist ebenso aufgebaut wie die erste Getriebestufe. Die Einstellung eines Übersetzungsverhältnisses erfolgt durch steuerbare (schaltbare) Sonnenradkupplungen 84, 85, die ebenfalls als Freiläufe ausgebildet sind und das jeweilige Sonnenrad 74, 75, drehfest in Bezug auf eine Vorwärtsdrehrichtung gegenüber der Nabenachse 7 machen. Der Abtrieb zur Nabenhülse erfolgt am zweiten Hohlrad 4 über einen Hohlradfreilauf 10, wenn eines der Sonnenräder 74, 75 drehfest zur Nabenachse 7 gemacht ist. Sind beide Sonnenräder frei drehbar, erfolgt der Abtrieb am Planetenradträger 2b, der einen Planetenradträgerfreilauf 9 hin zur nicht dargestellten Nabenhülse aufweist.

Die Planetenradträger 2a und 2b können von einem einteiligen Planetenradträger 2a, 2b gebildet sein, wie in Fig. 1 angedeutet. Der Planetenradträger 2a, 2b dient dazu, die Rückwärtsdrehbewegung zu einer nicht dargestellten Rücktrittbremse zu übertragen. Die Rücktrittbetätigung wird ebenfalls wie die Vorwärts-Antriebsdrehbewegung am Antreiber 1 eingeleitet. Ein rückwärts einkoppelnder Bremsfreilauf 12 ist zwischen Antreiber 1 und Planetenradträger 2a angeordnet. Damit bei einer Bremsbetätigung das dann schneller als der Planetenradträger nach rückwärts laufende erste Hohlrad 3 nicht ein Blockieren des Getriebes bewirkt, wird die Antreiberfreilaufkupplung 11 bei einer Rückwärtsdrehung ausgeschaltet. Der Bremsfreilauf 12 nimmt beim Bremsen den Planetenradträger 2a, 2b in Rückwärtsdrehrichtung mit, wodurch die Rücktrittbremse angesteuert wird. Die Rücktrittbremse kann auf an sich bekannte Weise, beispielsweise als Rollenbremse, in der Rollen auf Steigfeldern Bremsbacken nach radial aussen bewegen, oder als Konusbremse, in der ein axial bewegter Konus die Bremsbacken radial aufspreizt, ausgebildet sein. Die Bremsbetätigung erfolgt mit einer direkten Weiterleitung der Betätigungsbewegung am Antreiber unabhängig vom ausgewählten Gesamt-Übersetzungsverhältnis für die Vorwärtsdrehung.

Die Prinzipskizze in Fig. 1 stellt eine 9-Gang-Ausführung mit Rücktrittbremse dar. Die maximal 9 Gänge dieser Ausführung ergeben sich durch die Multiplikation der drei Getriebestufenübersetzungen der Underdrive-Getriebestufe I mit den drei möglichen Zuständen der Overdrive-Getriebestufe II. Die drei Schaltzustände der Getriebestufe I sind i) festgelegtes erstes Sonnenrad 71, ii) festgelegtes zweites Sonnenrad 72 und iii) festgelegtes drittes Sonnenrad 73, und die drei Schaltzustände der Getriebestufe II sind i) festgelegtes viertes Sonnenrad 74, ii) festgelegtes fünftes Sonnenrad 75 und iii) sowohl Sonnenrad 74 als auch Sonnenrad 75 sind nicht festgelegt.

Zu weiteren Erläuterungen der in Fig. 1 dargestellten Grundkonstruktion wird auf die EP 2 327 617 A2 verwiesen, aus der Fig. 1 stammt. Eine zur Steuerung der Sonnenradkupplungen geeignete, rein rotatorisch arbeitende Betätigungsmechanik, mit der eine Längsbewegung eines Schaltseils in eine Drehbewegung einer Betätigungshülse umgewandelt und in das Innere der Getriebenabe zur Einwirkung auf Sonnenradklinken der steuerbaren Sonnenradkupplungen übertragbar ist, ist in früheren Anmeldungen der vorliegenden Anmelderin beschrieben, nämlich in der am 23.10.2010 eingereichten deutschen Patentanmeldung DE 10 2010 049 438.0, in der am 11.10.2011 eingereichten niederländischen Patentanmeldung NL 2007564 und der am 24.10.2011 eingereichten US-amerikanischen Patentanmeldung US 13/279,446. Es können zur Ansteuerung der schaltbaren Sonnenradkupplungen aber auch andere, im Fachgebiet an sich bekannte Betätigungsmechaniken zum Einsatz kommen.

Bei der dargestellten Grundkonstruktion verlaufen alle Antriebsdrehmoment an der Nabenhülse bereitstellende "Drehmomentübertragungswege" zwischen dem als "Eingangsseite" dienenden Antreiber 1 und der als "Ausgangsseite" dienenden Nabenhülse über die Antreiberfreilaufkupplung 11. Ferner führt bei der dargestellten Grundkonstruktion eine "anderer Drehmomentübertragungsweg" vom Antreiber 1 über den Bremsfreilauf 12 und den Planetenradträger 2a, 2b zur Rücktrittsbremse.

Zur zusätzlichen Bereitstellung eines Übersetzungsverhältnisses von 1:1 könnte die Konstruktion dahingehend abgewandelt werden, dass ein weiterer "anderer Drehmomentübertragungsweg", mit dem Antriebsdrehmoment an der Nabenhülse bereitgestellt werden kann, von dem Antreiber 1 über eine schaltbare zweite Antreiberfreilaufkupplung zum Planetenradträger 2a, 2b verläuft.

Es ist auch anzumerken, dass auch andere Konstruktionen existieren und im Zusammenhang mit den Erfindungs- und Weiterbildungsvorschlägen denkbar sind, bei denen die Drehmomentübertragung über mehrere unterschiedliche "Drehmomentübertragungswege" zur Nabenhülse bzw. über wenigstens einen weiteren "Drehmomentübertragungsweg" zur Rücktrittsbremse auf ganz andere Art und Weise erfolgt.

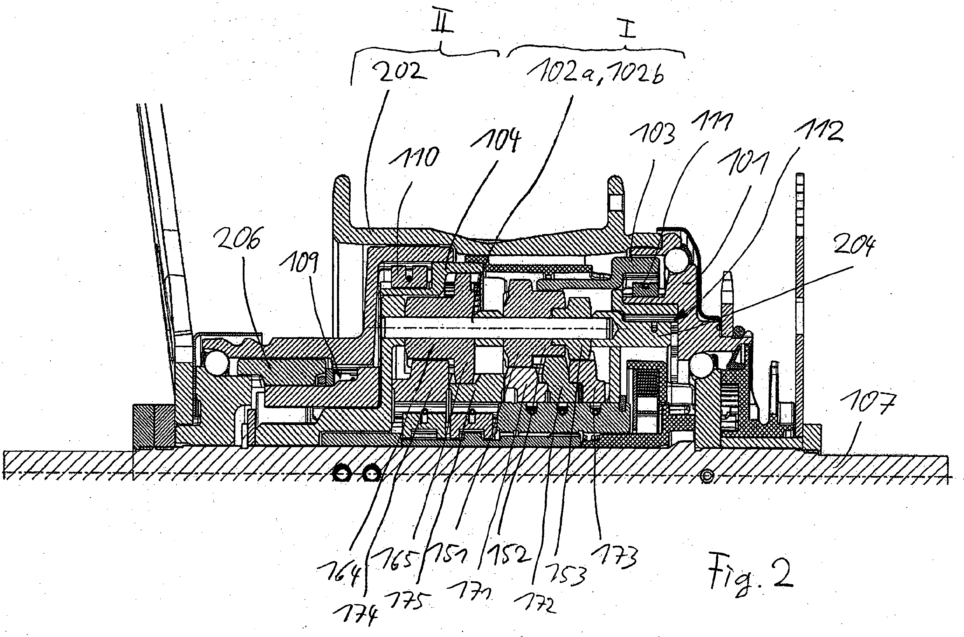

Fig. 2 zeigt ein konkretes Ausführungsbeispiel einer dem Getriebeschema der Fig. 1 entsprechenden Fahrrad-Getriebenabe nach der Erfindung, bei der der Erfindungsvorschlag im Zusammenhang mit der Antreiber-Freilaufkupplung 11 des Getriebeschemas realisiert ist. Es werden im Folgenden die in Fig. 1 und in der vorstehenden Erläuterung dieses Getriebeschemas verwendeten Bezugszeichen für entsprechende bzw. analoge Komponenten weiter verwendet, jeweils um 100 erhöht. Die komplette Konstruktion gemäß Fig. 2 wird nur insoweit erläutert, als dies für Erläuterung der Erfindung anhand des erfindungsgemäßen Antreiberfreilaufs nötig ist. Es sind deswegen auch nicht alle in Fig. 1 durch Bezugszeichen identifizierte Komponenten in Fig. 2 durch entsprechende Bezugszeichen identifiziert. Für im Folgenden angesprochene Komponenten, die in Fig. 1 nicht dargestellt bzw. nicht durch Bezugszeichen identifiziert sind, werden Bezugszeichen größer als 200 verwendet. So ist eine Nabenhülse mit 202 bezeichnet. In der Nabenhülse 202 sind entsprechend dem Getriebeschema der Fig. 1 zwei Planetengetriebestufen aufgenommen, von denen die Getriebestufe I das Hohlrad 103, die Planetenräder 151, 152 und 153 und die Sonnenräder 171, 172 und 173 aufweist und die Getriebestufe II die Planetenräder 164 und 165 und die Sonnenräder 174 und 175 aufweist. Alle Planetenräder sind von einem gemeinsamen Planetenträger 102a, 102b getragen. Den Sonnenrädern sind Sonnenradkupplungen zugeordnet, wie in Bezug auf das Getriebeschema der Fig. 1 erläutert.

Der Antreiber 101 trägt Klinken, die zusammen mit zahnartigen Mitnahmeformationen (auch als Eingriffsformation bezeichenbar) an einem Innenumfang des Hohlrads 103 eine Antreiber-Freilaufkupplung 111 realisieren und im Folgenden auch als Antreiberklinken bezeichnet werden. Im Folgenden werden diese Klinken ebenso wie die Antreiber-Freilaufkupplung durch das Bezugszeichen 111 angesprochen. Weitere, in Fig. 2 nicht erkennbare Klinken werden von einem radial innerhalb der Klinken 111 angeordneten Abschnitt 204 des Planetenradträgers 102a, 102b getragen und bilden einen Bremsfreilauf 112. Die Klinken (Bremsklinken) des Bremsfreilaufs werden im Folgenden ebenso wie der Bremsfreilauf durch das Bezugszeichen 112 angesprochen. Ein Hohlradfreilauf ist mit 110 bezeichnet. Vorhanden, aber nicht im Detail zu erkennen, ist auch ein Planetenradträgerfreilauf, der mit 109 bezeichnet ist. Durch Einleitung eines in Rückwärts-Drehrichtung wirkenden Drehmoments in den Antreiber kann über den Bremsfreilauf 112 und den Planetentradträger 102a, 102b eine Rücktrittbremse 206 betätigt werden.

Die Sonnenradkupplungen werden gemäß Fig. 2 vermittels einer Betätigungsmechanik betätigt bzw. geschaltet, die hier nicht weiter beschrieben wird, da auch völlig andere Betätigungsmechaniken im Prinzip zum Einsatz kommen können. Die Betätigungsmechanik der Getriebenabe der Fig. 2 entspricht im Wesentlichen der in der am 23.10.2010 eingereichten deutschen Patentanmeldung DE 10 2010 049 438.0 und in den korrespondierenden Anmeldungen in NL und US beschriebenen Konstruktion. Es wird auf den Inhalt dieser Anmeldungen verwiesen, deren Offenbarungsgehalt durch Bezugnahme vollständig in den Offenbarungsgehalt der vorliegenden Anmeldung übernommen wird.

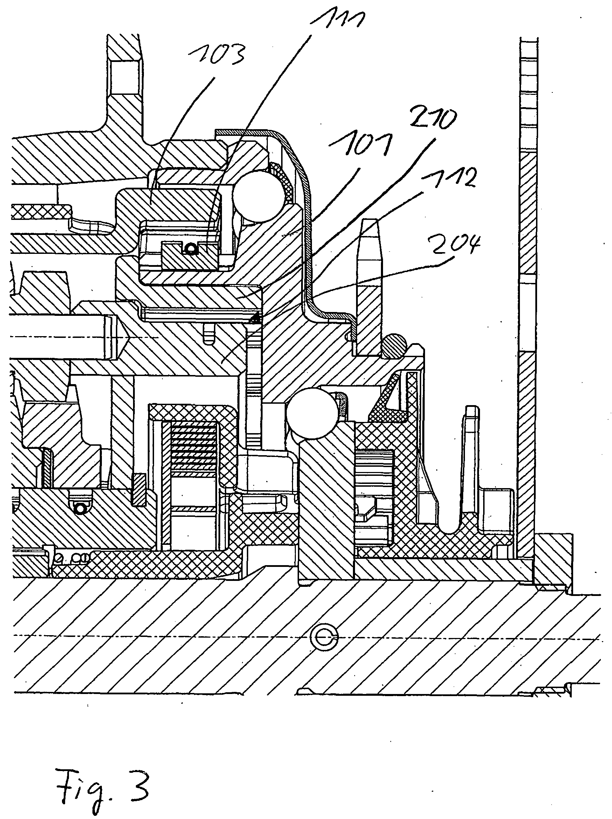

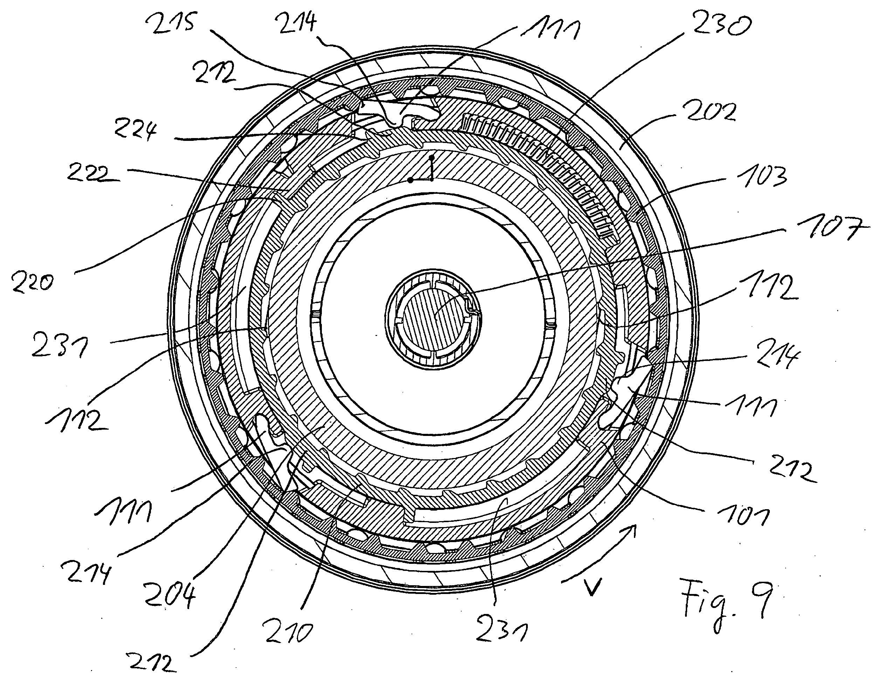

Wie in Fig. 3 zu erkennen, ist radial zwischen dem Planetenradträger-Endabschnitt 204, der die in Fig. 9 erkennbaren Bremsklinken 112 des Bremsfreilaufs 112 trägt, und einem die Klinken 111 tragenden Ringabschnitt des Antreibers 101 ein als Ringteil ausgeführtes Bauteil 210 (im Folgenden als Ringteil 210 angesprochen) angeordnet, welches an einem Innenumfang zahnartige Mitnahmeformationen (auch als Eingriffsformation bezeichenbar) aufweist, die mit den Bremsklinken 112 zur Bildung des Bremsfreilaufs 112 zusammenwirken. Auf an sich bekannte Art und Weise sind die Bremsklinken 112 durch eine Federanordnung, beispielsweise gebildet von einer Ringfeder, in Richtung zur Einnahme einer Eingriffsstellung vorgespannt, in der die Bremsklinken mit den Mitnahmeformationen am Innenumfang des Ringteils 210 eingreifen können, um in Rückwärts-Drehrichtung vom Antreiber 101 auf das Ringteil 210 übertragenes Brems-Drehmoment auf den Ringabschnitt 204 des Planetenradträgers 102a, 102b zu übertragen, zur Weiterleitung zur Rücktrittbremse 206. Dreht sich hingegen der Antreiber 101 mit dem Ringteil 210 in Vorwärts-Drehrichtung zur Übertragung von Antriebs-Drehmoment über die Antreiber-Freilaufkupplung 111 zum Hohlrad 103 und dann weiter über die Getriebestufen zur Nabenhülse 202, wirkten die entsprechend gestalteten Mitnahmeformationen am Innenumfang des Ringteils 210 so auf die Bremsklinken 112, dass diese gegen die Rückstellkraft der Federanordnung durch die jeweilige Mitnahmeformation in eine Überlaufstellung gedrückt werden, so dass aufgrund der so realisierten Freilauffunktion der Antreiber 101 mit dem Ringteil 110 und dem Hohlrad 103 einerseits und der Planetenradträger andererseits sich mit unterschiedlichen Drehgeschwindigkeiten um die Nabenachse 107 ungehindert drehen können, wie es dem momentanen Schaltzustand der Getriebestufe I entspricht.

Wie schon angesprochen, ist das einerseits den Antriebsklinke 111 zugeordnete und andererseits mit seinen Mitnahmeformationen und den Bremsklinken 112 den Bremsfreilauf 112 bildende Ringteil 210 zusammen mit dem Antreiber 101 um die Nabenachse drehbar und hierzu an dem Antreiber 101 gelagert. Das Ringteil 210 ist dabei relativ zu dem Antreiber 101 verdrehbar, zumindest zwischen einer Aktivierungsstellung, in der die Antriebsklinken 111 als normale, durch eine Klinkenfeder (beispielsweise eine Ringfeder) oder Klinkenfederanordnung in Richtung zu ihrer Eingriffsstellung zur Wechselwirkung mit einer Mitnahmeformation am Innenumfang des Hohlrads 103 vorgespannte Freilaufklinken wirken, um in Vorwärtsdrehrichtung wirkendes Antriebsmoment vom Antreiber 101 zum Hohlrad 103 und damit über die Getriebestufen zur Nabenhülse 202 zu übertragen, und einer Deaktivierungsstellung, in der die Antreiber-Freilaufkupplung 111 ausgeschaltet ist, da die Antriebsklinken 111 aus ihrer Eingriffsstellung entfernt sind und eine Freigabestellung einnehmen, in der sie nicht mit den Mitnahmeformationen am Innenumfang des Hohlrads 103 wechselwirken.

Gemäß der Darstellung in Fig. 9 befindet sich das Ringteil 210 in der Aktivierungsstellung, und die Antriebsklinken 111 nehmen ihre Eingriffsstellung ein. Es kann nun in den Antreiber 101 in Vorwärts-Drehrichtung eingeleitetes Drehmoment mittels der Antriebsklinken 111 und der Mitnahmeformationen des Hohlrads 101 auf das Hohlrad übertragen und damit über die Getriebestufen zur Nabenhülse 202 weitergeleitet werden. Die Antriebsklinken 111 wirken als normale Freilaufklinken, die überlaufen würden, wenn sich das Hohlrad 103 schneller als der Antreiber 101 in Vorwärtsdrehrichtung drehen würde bzw. wenn sich der Antreiber 101 relativ zum Hohlrad 103 rückwärts drehen würde. Diese Funktionsweise wird dadurch erreicht, dass in der Aktivierungsstellung des auch als Mitnehmer bezeichenbaren Ringteils 210 ein radial vorstehender Nockenflächenhügel 212 radial unterhalb der jeweiligen Klinke 111 liegt und die Klinke an einem radial nach innen vorstehenden Nockenfolgerabschnitt 214 nach radial außen drückt. Die Klinken 111 sind jeweils um eine Schwenkachse entsprechend dem Kontaktbereich zwischen dem Nockenfolgeabschnitt 214 und dem Nockenflächenhügel 212 schwenkbar und durch ihre Klinkenfeder bzw. Klinkenfederanordnung in Richtung zur Einnahme ihrer Eingriffsstellung vorgespannt. Würde das Hohlrad 103 sich schneller in Vorwärtsdrehrichtung drehen als der Antreiber 101 bzw. würde sich der Antreiber 101 relativ zum Hohlrad 103 rückwärts drehen, würden die Antriebsklinken 111 durch die Zähne der Mitnahmeformation des Hohlrads wiederholt aus ihrer Eingriffsstellung radial nach innen weg gedrückt werden, im Sinne eines Schwenkens um die durch den Kontaktbereich zwischen dem Nockenflächenhügel 212 und dem Nockenfolgerabschnitt 214 definierte Schwenkachse, die Klinken würden also auf an sich bekannte Art und Weise überlaufen.

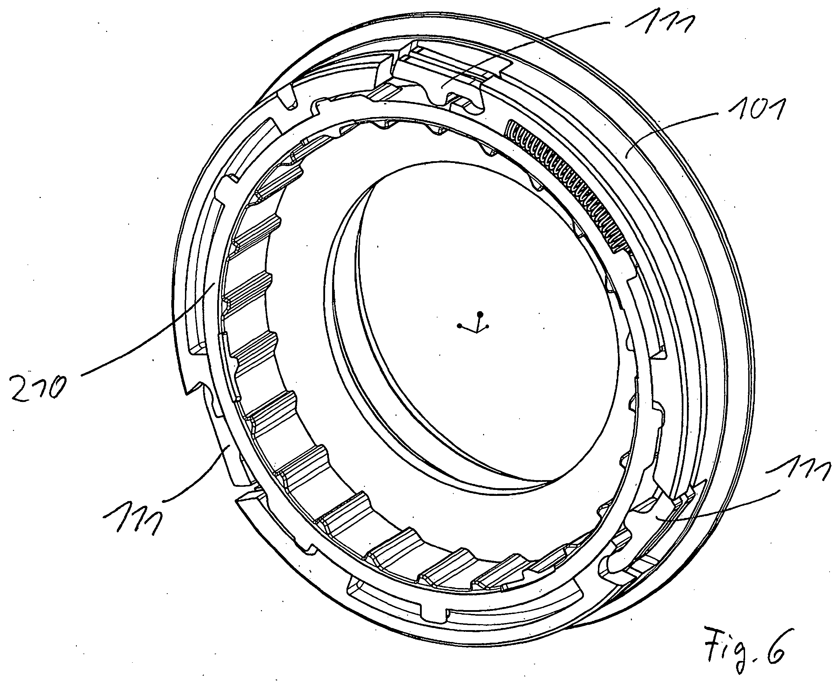

Befindet sich hingegen das Ringteil 210 in der in den Fig. 6, 7 und 8 dargestellten Deaktivierungsstellung relativ zum Antreiber 101, so ist der der jeweiligen Antriebsklinke 111 zugeordnete Nockenflächenhügel 212 aus dem Bereich radial unterhalb der jeweiligen Klinke 111 weg gedreht, so dass die Klinken 111 mangels Abstützung an ihrem Nockenfolgerabschnitt 114 aus ihrer Eingriffsstellung entfernt sind, indem sie um eine Schwenkachse am gegenüber einem zum Eingriff mit der Hohlrad-Mitnahmeverzahnung dienenden Eingriffsende 215 der Klinken entgegengesetzten Klinkenende nach radial innen schwenken. Die in der Deaktivierungsstellung des Ringteils 210 wirksame Schwenkachse wird definiert durch den Kontaktbereich zwischen dem vom Eingriffsende 215 der jeweiligen Klinke 111 entfernten Klinkenendabschnitt 216 und einer den Klinkeriendabschnitt 116 aufnehmenden Klinkenaufnahme 218 des Antreibers 101.

In der Deaktivierungsstellung des Ringteils 210 wirkt die Klinkenfeder bzw. wirkt die Klinkenfederanordnung auf andere Weise auf die Antriebsklinken 111 als in der Aktivierungsstellung des Ringteils 110, nämlich in Richtung einer Einnahme der gemäß den Fig. 6, 7 und 8 dargestellten Freigabestellung, in der die Klinken 111 nicht radial von dem Antreiber 101 vorstehen und dementsprechend nicht mit den Mitnahmezähnen am Innenumfang des Hohlrads 103 wechselwirken können. Die Antriebsklinken 111 erreichen diese Freigabestellung entweder alleine unter der Vorspannkraft der Klinkenfeder bzw. Klinkenfederanordnung bei der Verstellung des Ringteils 210 aus der Aktivierungsstellung in die Deaktivierungsstellung, während der Nockenflächenhügel 212 das Schwenken der Antriebsklinken 111 um die angesprochene Schwenkachse des Kontaktbereichs zwischen dem Klinkenendabschnitt 216 und der Klinkenaufnahme 218 dadurch freigibt, dass er sich unter dem Nockenfolgerabschnitt 214 weg dreht und schließlich unter dem Nockenfolgerabschnitt 214 entfernt ist, oder unter Mitwirkung einer Wechselwirkung zwischen dem Klinkeneingriffsende 215 und der Mitnahmeverzahnung des Hohlrads 103 in Folge einer anfänglichen Drehung des Antreibers 101 in Rückwärtsdrehrichtung relativ zum Hohlrad 103 beim Bremsen, wobei die Klinken 111 unter Umständen zuerst überlaufen und erst danach in die Freigabestellung bewegt werden, sollte zuerst ein Mitnahmezahn des Hohlrads 103 mit dem Klinkeneingriffsende 215 wechsetwirken, bevor dann der Nockenflächenhügel 212 unter dem Nockenfolgerabschnitt 214 der jeweiligen Antriebsklinke 211 weg gedreht ist. Hierauf wird unten im Zusammenhang mit dem zwischen dem Antreiber 101 und dem Ringteil 210 vorgesehenen Drehspiel noch näher eingegangen.

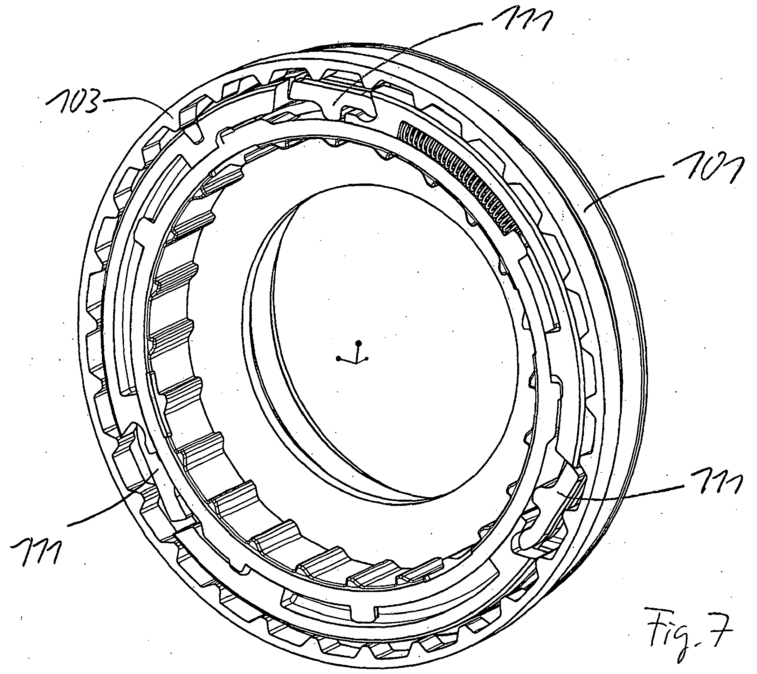

Anzumerken ist, dass bezogen auf die Funktion der Antriebsklinken 111 richtiger von einem Aktivierungs-Drehstellungsbereich und einem Deaktivierungs-Drehstellungsbereich des Ringteils 210 relativ zum Antreiber 101 gesprochen werden sollte, da der auf den Nockenfolgerabschnitt 214 wirkende Abschnitt des Nockenflächenflügels 212 eine gewisse Ausdehnung in Umfangsrichtung hat und der sich unter dem Nockenfolgerabschnitt 214 vorbei drehende Abschnitt des Ringteils 210 ohne Nockenflächenhügel sogar eine vergleichsweise große Ausdehnung in Umfangsrichtung hat. Zweckmäßig kann die in Fig. 9 dargestellte Grenzstellung, in der ein radial vorstehender Anschlag 220 des Ringteils 210 an einem Anschlag 222 des Antreibers 101 anschlägt, als "Aktivierungsstellung" des Ringteils 210 zu bezeichnen, und eine gemäß den Fig. 7 bis 8 fast erreichte Grenzstellung, an der ein Anschlagabschnitt 224 des Nockenflächenhügels 212 des Ringteils 210 an der anderen Seite des Anschlags 222 des Antreibers 101 anschlägt, als "Deaktivierungsstellung" des Ringteils 210 zu bezeichnen, obwohl tatsächlich die Klinken 111 nicht nur in diesen Grenzstellungen "aktiviert" bzw. "deaktiviert" sind, sondern in jeweiligen relativen Drehwinkelintervallen des möglichen relativen Drehwinkelbereichs zwischen dem Ringteil 210 und dem Antreiber 101.

Wie in den Fig. 6 bis 9 zu erkennen, ist zwischen einer Abstützfläche des Antreibers 101 einerseits und einer Abstützfläche des Ringteils 210 andererseits eine als Spiralfeder ausgeführte Druckfeder 230 angeordnet, die das Ringteil relativ zum Antreiber in Richtung der Einnahme der Deaktivierungsstellung vorspannt und nach einem Bremsvorgang ein Wiedereingreifen der Antriebsklinken 111 gewährleistet, indem das Ringteil 210 zurück in die Aktivierungsstellung gedreht wird, wenn kein in Rückwärtsdrehrichtung wirkendes Drehmoment mehr in die Getriebenabe eingeleitet wird.

In den Fig. 6 bis 9 ist nur eine einzige Spiratdruckfeder 230 dargestellt. Vorzugsweise sind an den mit 231 bezeichneten Stellen zwei weitere Spiraldruckfedern 230 zwischen dem Ringteil 210 und dem Antreiber 101 wirksam, das Ringteil 210 in Richtung des Anschlags des Ringteilanschlags 220 am Hohlradanschlag 222, also in Richtung der Einnahme der Aktivierungsstellung vorzuspannen. Das Ringteil nimmt also normalerweise immer die Aktivierungsstellung ein, in denen die Antriebsklinken 111 als normale Freilaufklinken wirken. Bei der Drehung des Antreibers 101 in Vorwärts-Drehrichtung wird das Ringteil 210 durch den gegenseitigen Anschlag bei 220, 222 in der Vorwärts-Drehrichtung mitgenommen, wobei die Bremsklinken auf dem sich in Vorwärts-Drehrichtung langsamer drehenden Klinkenträgerabschnitt 204 des Planetenradträgers 102a, 102b überlaufen.

Die Vorwärtsdrehung des Antreibers 101 und des Hohlrads 103, die Vorwärtsdrehung des demgegenüber langsamer drehenden Planetenradträgers 102a, 102b und die Vorwärtsdrehung der sich mindestens mit einer aus dem wirksamen Getriebegang ergebenden Drehgeschwindigkeit drehenden Nabenhülse 202 erfolgt in der Darstellung der Fig. 6 bis 9 entgegen dem Uhrzeigersinn, wie in Fig. 9 durch einen Pfeil V angezeigt.

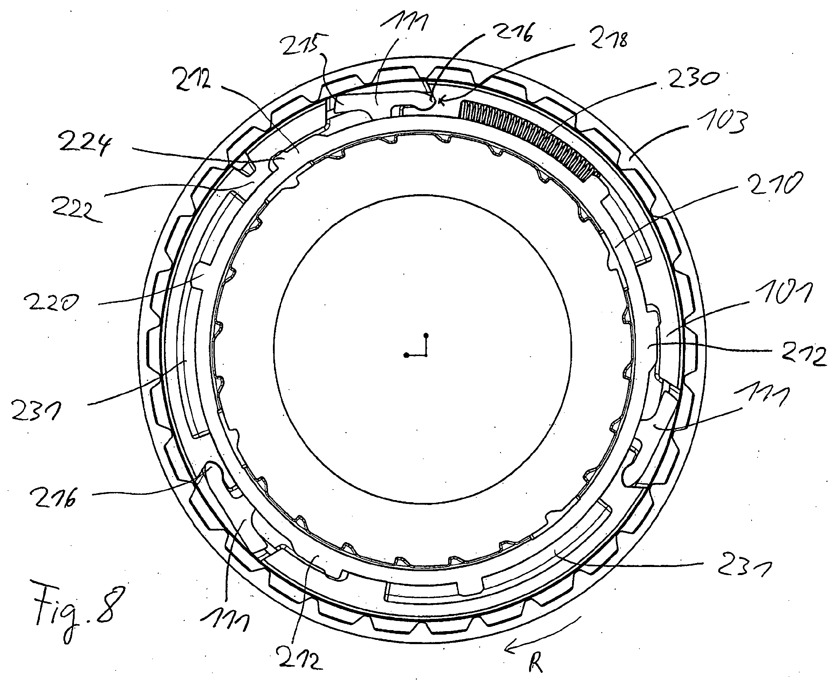

Die Rückwärtsdrehung des Antreibers 101 und des durch die Bremsklinken 112 mitgenommenen Planetenradträgers 102a, 102b und die demgegenüber schnellere Rückwärtsdrehung des Hohlrads 103 beim Bremsen erfolgt demgegenüber in der Darstellung der genannten Fig. 6 bis 9 im Uhrzeigersinn, wie in Fig. 8 durch den Pfeil R angezeigt. Um zum Bremsen Bremsdrehmoments vom Antreiber 101 über das als Mitnehmer oder Mitnehmer-Ring bezeichenbare Ringteil 210, die Bremsklinken 212 auf den Klinkenträgerabschnitt 204 des Planetenradträgers und damit über den Planetenradträger 102a, 102b zur Rücktrittbremse 206 übertragen zu können, wird das Ringteil 210 durch den Antreiber 101 formschlüssig drehmitgenommen, durch Anschlag des Antreiberanschlags 222 an dem Ringteilanschlag 224 in der Deaktivierungsstellung des Ringteils.

Der Übergang des Ringteils 210 von der Aktivierungsstellung (Fig. 9) zur Deaktivierungsstellung (Fig. 8) erfolgt dabei dadurch, dass die Mitnahmeverzahnung am Innenumfang des Ringteils 210 bei beginnender Rückwärtsdrehung des Antreibers 101 und resultierender beginnender Rückwärtsdrehung des Ringteiis 110 in Folge der Kräfte der Federn 230 mit einem jeweiligen Mitnahmezahn an den beiden Bremsklinken 112 im Sinne einer formschlüssigen Drehmitnahme in Rückwärtsdrehrichtung angreift. Hieraus resultieren auf das Ringteil 210 wirkende Gegenkräfte, die der Federvorspannkraft der Spiraldruckfedern 230 entgegenwirken und unter weiterer Spannung dieser Spiraldruckfedern das Ringteil 210 aus der Aktivierungsstellung gemäß Fig. 9 in Richtung der Deaktivierungsstellung gemäß Fig. 8 relativ zum Antreiber 101 verdrehen. Sobald dann die Anschläge 224 und 222 aneinander anschlagen, wird dann das Ringteil 210 formschlüssig durch den Antreiber 101 in Rückwärts-Drehrichtung mitgenommen.

Da beim Rückwärtsdrehen des Antreibers die über die Bremsklinken resultierende Rückwärtsdrehung des Planetenradträgers eine schnellere Rückwärtsdrehung des Hohlrads 103 als der Antreiber 101 zur Folge hat, ist das durch die Anschlagelemente 220 und 224 des Ringteils 210 im Zusammenwirken mit dem Antreiberanschlag 222 realisierte Drehspiel zwischen dem Antreiber 101 und dem Ringteil 210 wichtig, um Getriebeverspannungen und eine Beeinträchtigung oder gar Verhinderung des Bremsens zu vermeiden. Das Drehspiel ist mindestens so groß, dass die nach Aufbrauchen des Drehspiels in Folge des Anschlagens der Anschläge 222 und 224 resultierende Drehmitnahme des Planetenradträgers 102a, 102b erst dann erfolgt, wenn das Ringteil 210 mit dem Nockenflächenhügel 212 den jeweiligen Nockenfolgerabschnitt 214 nicht mehr unterstützt und damit die Klinken 111 für die Entfernung in ihre Freigabestellung freigegeben sind, was durch die Klinkenfeder bzw.

Klinkenfederanordnung erfolgt, ggf. unter Mitwirkung eines Anschlagens eines jeweiligen Mitnahmezahns am Hohlrad-Innenumfang, der in diesem Zustand der Klinken im Sinne eines Abweisens der Klinken in Richtung zu ihrer Freigabestellung wirkt. Es wird so vermieden, dass einerseits die Klinken 111 noch als normale Freilaufklinken wirken, die Drehmoment vom Antreiber 101 zum Hohlrad 103 in Vorwärts-Drehrichtung oder entsprechend Drehmoment vom Hohlrad 103 zum Antreiber 101 in Rückwärts-Drehrichtung übertragen können und andererseits zugleich Drehmoment in Rückwärts-Drehrichtung auf den Planetenradträger 102a, 102b übertragen wird mit der Folge einer Drehung des Hohlrads 103 schneller in Rückwärts-Drehrichtung als der Antreiber 101.

Relevant für im Betrieb der Mehrgang-Getriebenabe sind also folgende Funktionen der Antriebsklinken. Bei Vorwärtsdrehung des Antreibers 101, typischerweise in Folge eines Vorwärts-Pedalieren des Radfahrers, laufen die im Antreiber 101 platzierten Antriebsklinken 111 mit ihrem jeweiligen Nockenfolgerabschnitt 214 den jeweils zugeordneten Nockenflächenhügel 112 des Ringteils 110 hoch und greifen dadurch in die Verzahnung des Hohlrads 103 der ersten Planetengetriebestufe ein. Dies ist der Normalzustand während des Antreibens in Vorwärtsrichtung. Bei Rückwärtsdrehung des Antreibers 101 für ein Bremsen mittels der Rücktrittsbremse 206 laufen diese Antriebsklinken 111 mit ihrem jeweiligen Nockenfolgerabschnitt 214 den zugeordneten Nockenflächenhügel 212 des Ringteils 210 hinunter und sind dann, bevor das Ringteil 210 am Ende des vorgesehenen Leerwegs zwischen dem Ringteil 210 und dem Antreiber 101 an diesem anschlägt und rückwärts drehmitgenommen wird, außer Eingriff, wie in Fig. 9 gezeigt. Die immer aktiven Planetenradträgerklinken (Bremsklinken) 212, die bei der Vorwärtsdrehrichtung überrollt werden (überlaufen), werden von der Innenverzahnung des Ringteils 210 rückwärts drehmitgenommen, so dass die Bremsfunktion erfüllt werden kann. Um die Verspannung des Getriebes zu vermeiden, das Bremsen zu ermöglichen, und die Gefahr eines so genannten "Brake Lock" zu vermeiden, tauchen die Antriebsklinken 111 beim Übergang von der Aktivierungsstellung zur Deaktivierungsstellung ab, wobei in einer Übergangssituation auch noch die Freilauffunktion der Antriebsklinken 111 zum Einsatz kommen kann, wenn sich der Antreiber 111 mit den Klinken 111 aber noch nicht das Hohlrad 103 rückwärts dreht, bis dann der Nockenflächenhügel 212 unter dem jeweiligen Nockenfolgerabschnitt 214 weggedreht ist.

Die Antriebsklinken 111 erfüllen im Zusammenwirken mit dem Ringteil 210 auch eine wichtige Funktion beim Rückwärtsheben des Fahrrads, da sich auch beim Rückwärtsschieben des Fahrrads das Hohlrad 203 schneller als der Planetenradträger 102a, 102b in Rückwärtsdrehrichtung (Pfeil R in Fig. 8) dreht, so dass in der Aktivierungsstellung des Ringteils 210 das Hohlrad 103 über die Antriebsklinken 111 den Antreiber 101 in Rückwärtsdrehrichtung mitnimmt. Es wirkt dann die Mitnahmeverzahnung am Innenumfang der Ringteils 210 im Sinne einer Drehmitnahme auf die Bremsklinken 112. Der Planetenradträger 102a, 102b kann diese Drehung aber nicht mitmachen, so dass sich das Ringteil 110 nur mit der gegenüber dem Hohlrad 103 und damit den Antreiber 101 langsameren Drehgeschwindigkeit des Planetenradträgers 102a, 102b bzw. dessen Klinkenträgerabschnitt 204 rückwärts drehen kann, mit der Folge, dass das Ringteil 210 relativ zum Antreiber in Richtung zur Deaktivierungsstellung verdreht wird. Die Abstützung der Antriebsklinken 111 an ihrem Nockenfolgerabschnitt 214 durch den zugeordneten Nockenflächenhügel 212 wird dann aufgehoben, indem der Nockenflächenhügel 212 außer Eingriff mit dem Nockenfolgerabschnitt 214 gebracht wird durch die relative Verdrehung zwischen dem Antreiber 101 und dem Ringteil 210 in Richtung zur Deaktivierungsstellung. Die Antriebsklinken 111 werden nun durch die Klinkenfeder bzw. Klinkenfederanordnung in ihre Freigabestellung geschwenkt, in der sie mit der Mitnahmeverzahnung des Hohlrads 103 nicht wechselwirken können. Auch eine Wechselwirkung von Abweisschrägen der Hohlradverzahnung mit den Eingriffsenden 215 der Antriebsklinke 111 kann die Entfernung der Antriebsklinken 111 aus der Eingriffsstellung bewirken oder bei dieser mitwirken.

Es wird somit auch beim Rückwärtsschieben des Fahrrads eine Verspannung des Fahrradgetriebes zuverlässig verhindert. Aufgrund der zwischen dem Ringteil 210 und dem Antreiber 101 wirksamen Federanordnung, im Falle des Ausführungsbeispiels aufgrund der Spiraldruckfedern 230, wird das Ringteil 210 beim Rückwärtsschieben wiederholt in die Aktivierungsstellung gebracht und aus dieser dann wieder entfernt, so dass die Antriebsklinken 111 beim Rückwärtsschieben wiederholt wieder die Eingriffsstellung einnehmen und dann wieder außer Eingriff gebracht werden. Der Vorgang des Entfernens aus der Eingriffsstellung und des erneuten Eingreifens der Antriebsklinken 111 und die dabei auftretenden relativen Verdrehungen zwischen dem Antreiber 101 und dem Ringteil 210 wiederholen sich also so lange, bis das Fahrrad nicht mehr rückwärts geschoben wird.

Zur Funktionsweise der Antriebsklinken 111 hinsichtlich deren "Umschaltung" zwischen zwei Betriebsmodi wird ergänzend auf den Inhalt der EP 2 112 062 A1 verwiesen, die eine Klinke mit zwei alternativen Schwenkachsen und entsprechender Funktionsweise in einem völlig anderen technischen Zusammenhang beschreibt.

Beim beschriebenen Ausführungsbeispiel ermöglichen die erfindungsgemäßen Antriebsklinken 111 einen Wechsel zwischen dem Antreiben und dem Bremsen einer Rücktrittbremsnabe bei Drehrichtungsumkehr des Antreibers sowie auch ein Rückwärtsschieben des Fahrrads, ohne dass Verspannungen des Getriebes oder gar der unbedingt zu vermeidende so genannte "Brake Lock" zu befürchten wären. Bei Lösungen des Stands der Technik werden typischerweise wechselweise gegenläufige Steuerelemente (meist zwei Paare von Klinken) in Eingriff gebracht, wobei der wechselseitige Eingriff bei einer Drehrichtungsumkehr durch eine axiale Zwangsabweisung die Antriebssteuerelemente in einem Bereich ohne Eingriffsmöglichkeit erreicht wird oder der für den wechselseitigen Eingriff notwendige Nichteingriff durch ein friktions- oder zwangsgesteuertes Abdecken der entlasteten Antriebssteuerelemente mit einer Hülse oder dergleichen realisiert wird. Der Erfindungsvorschlag ermöglicht einen rein rotatorischen Mechanismus ohne komplexe Mechanismen für ein axiales Abweisen, und es wird erreicht, dass die Antriebsklinken zuverlässig beim Bremsen abtauchen und dementsprechend die Bremsklinken immer ungesteuert zur Verfügung stehen.

Auch bei anderen Fahrradgetriebekonstruktion lassen sich mit einer erfindungsgemäßen Klinkenanordnung Verspannungen im Getriebe und im Falle eines Bremsens ein so genannter "Brake Lock" zuverlässig vermeiden, wenn Drehmoment über verschiedene Drehmomentübertragungswege zum Antreiben des Fahrrads bzw. zum Bremsen zu übertragen ist.

Für eine Klinke (111) in einem Fahrradgetriebe, über die wenigstens ein Drehmomentübertragungsweg von einer Eingangsseite (101) zu einer Ausgangsseite (202) verläuft und der eine relativ zu einer die Klinke tragenden ersten Komponente (101) verstellbare dritte Komponente (210) zugeordnet ist, die zur wechselweisen Aktivierung und Deaktivierung der Klinke mit dieser wechseiwirkt, wird vorgeschlagen, dass die dritte Komponente (210) eine Nockenfläche (212) aufweist, die mit einem Nockenfolgerabschnitt (214) der Klinke (111) derart zusammenwirkt,
- dass bei einer Bewegung der dritten Komponente (210) aus der Aktivierungstellung in die Deaktivierungsstellung die Nockenfläche (212) sich so relativ zum Nockenfolgerabschnitt (214) bewegt, dass das Entfernen der Klinke (111) aus der Eingriffsstellung freigegeben wird, und
- dass bei einer Bewegung der dritten Komponente (210) aus der Deaktivierungsstellung in die Aktivierungsstellung durch das Zusammenwirken der Nockenfläche (210) mit dem Nockenfolgerabschnitt (214) die Klinke (111) zwangsbewegt wird, um in der Aktivierungsstellung der dritten Komponente (210) die Eingriffsstellung einzunehmen oder zumindest in Richtung einer Einnahme der Eingriffsstellung vorgespannt zu sein.

## Patentansprüche

1. Fahrradgetriebe, umfassend:
- eine Eingangsseite (101), an der ein auf einem Pedalieren beruhendes Eingangsdrehmoment in das Fahrradgetriebe einleitbar ist, wahlweise als in eine Antriebsrichtung wirkendes Eingangs-Antriebsdrehmoment oder als in eine Bremsrichtung wirkendes Eingangs-Bremsdrehmoment;
- eine Ausgangsseite (202), an der ein auf dem Eingangs-Antriebsdrehmoment beruhendes Ausgangs-Antriebsdrehmoment zur Übertragung auf ein antreibbares Laufrad eines Fahrrads bereitstellbar ist;
- eine der Ausgangsseite zugeordnete Bremseinrichtung (206), die auf Basis des Eingangs-Bremsdrehmoments in einen von dem Eingangs-Bremsdrehmoment abhängigen Bremseingriff bringbar ist, um über die Ausgangsseite (202) ein von dem Eingangs-Bremsdrehmoment abhängiges Bremsdrehmoment zum Bremsen des antreibbaren Laufrads bereitzustellen;
- eine mehrere Drehmomentübertragungswege unterschiedlicher Übersetzung oder Untersetzung zwischen der Eingangsseite (101) einerseits und der Ausgangsseite (202) und der Bremseinrichtung (206) andererseits bereitstellende, vorzugsweise wenigstens ein Planetengetriebe umfassende Getriebeanordnung (I, II); wobei wenigstens ein die Eingangsseite (101) mit der Ausgangsseite (202) verbindender Drehmomentübertragungsweg über wenigstens eine Klinke (111) verläuft,
- die für die Drehmomentübertragung über diesen Drehmomentübertragungsweg in eine eine Drehmomeritübertragung zwischen einer die Klinke tragenden, drehbar gelagerten ersten Komponente (101) des Fahrradgetriebes und einer zugeordneten, drehbar gelagerten zweiten Komponente (103) des Fahrradgetriebes ermöglichende Eingriffsstellung zur Herstellung einer Drehmitnahmeverbindung durch Eingriff mit einer zugeordneten Eingriffsformation der zweiten Komponente (103) bringbar ist und
- die für eine Drehmomentübertragung über wenigstens einen anderen Drehmomentmomentübertragungsweg auf Grundlage des an der Eingangseite (101) zur Übertragung über den anderen Drehmomentübertragungsweg eingeleiteten Eingangsdrehmoments aus der Eingriffsstellung entfernbar ist, um eine relative Verdrehung der beiden Komponenten (101, 103) zumindest in einer bei einer Drehmomentübertragung über den anderen Drehmomentübertragungsweg auftretenden Relativdrehrichtung zuzulassen;
wobei der Klinke (111) eine relativ zur ersten Komponente (101) verstellbare dritte Komponente (210) des Fahrradgetriebes zugeordnet ist, die derart mit der Klinke (111) wechselwirkt,
- dass in einer im Folgenden als Aktivierungsstellung bezeichnet ersten Stellung der dritten Komponente (210) relativ zur ersten Komponente (101) die Klinke (111) die Eingriffsstellung einnimmt oder zumindest in Richtung einer Einnahme der Eingriffsstellung vorgespannt ist, und
- dass die Klinke (111) auf Grundlage einer Verstellung der dritten Komponente (210) aus der Aktivierungsstellung in eine im Folgenden als Deaktivierungsstellung bezeichnete zweite Stellung relativ zur ersten Komponente (101) aus der Eingriffsstellung entfernbar ist; wobei dass die dritte Komponente (210) eine Nockenfläche (212) aufweist, die mit einem Nockenfolgerabschnitt (214) der Klinke (111) derart zusammenwirkt,
- dass bei einer Bewegung der dritten Komponente (210) aus der Aktivierungstellung In die Deaktivierungsstellung die Nockenfläche (212) sich so relativ zum Nokkenfolgerabschnitt (214) bewegt, dass das Entfernen der Klinke (111) aus der Eingriffsstellung freigegeben wird, und
- dass bei einer Bewegung der dritten Komponente (210) aus der Deaktivierungsstellung In die Aktivierungsstellung durch das Zusammenwirken der Nokkenfläche (212) mit dem Nockenfolgerabschnitt (214) die Klinke (111) zwangsbewegt wird, um in der Aktivierungsstellung der dritten Komponente (210) die Eingriffsstellung einzunehmen oder zumindest in Richtung einer Einnahme der Eingriffsstellung vorgespannt zu sein, **dadurch gekennzeichnet,** die Klinke (111) In der Aktivierungsstellung der dritten Komponente (210) um eine von dem Nockenfolgerabschnitt (214) definierte erste Schwenkachse schwenkbar ist und in der Deaktivierungsstellung der dritten Komponente (210) um eine zweite Schwenkachse schwenkbar ist, die von einem von dem Nockenfolgerabschnitt (214) beabstandeten Klinkenabschnitt (216) definiert ist.

2. Fahrradgetriebe nach Anspruch 1, **dadurch gekennzeichnet, dass** die dritte Komponente (210) an der ersten Komponente (101) zur gemeinsamen Drehung gelagert ist und dass die dritte Komponente (210) relativ zur ersten Komponente (101) verdrehbar ist, vorzugsweise über einen begrenzten Drohwinkelbereich.

3. Fahrradgetriebe nach Anspruch 1 oder 2, dadurch gekenzeichnet, dass die dritte Komponente (210) durch eine Federanordnung (230) in Richtung zur Aktivierungsstellung vorgespannt ist.

4. Fahrradgetriebe nach Anspruch 3, **dadurch gekennzeichnet, dass** die Klinke (111) um die zweite Schwenkachse schwenkbar ist, wenn die dritte Komponente (210) die Deaktivierungsstellung einnimmt, und dass die Klinke (111) um die erste Schwenkachse schwenkbar ist, wenn die dritte Komponente (210) die Aktivierungsstellung einnimt.

5. Fahrradgetriebe nach Anspruch 3 oder 4, **gekennzeichnet durch** eine der Klinke zugeordnete, auf diese wirkende Federanordnung, die die Klinke (111) in der Aktivierungsstellung der dritten Komponente (210) im Sinne eines Schwenkens um die erste Schwenkachse in Richtung zur Eingriffsstellung vorspannt und die die Klinke (111) in der Deaktivierungsstellung der dritten Komponente (210) im Sinne eines Schwenkens um die zweite Schwenkachse in Richtung einer Stellung außer Eingriff mit der zugeordneten Eingriffsformation vorspannt.

6. Fahrradgetriebe nach einem der Ansprüche 1 bis 5, **dadurch gekennzeichnet, dass** die Klinke (111) mittels der dritten Komponente (210) zwischen einer Wirkungsweise als Freilaufklinke, die in Richtung einer Einnahme der Eingriffsstellung vorgespannt ist, und einer Wirkungsweise als in Richtung einer/der Stellung außer Eingriff mit der zugeordneten Eingriffsformation vorgespannte Klinke umschaltbar ist.

7. Fahrradgetriebe nach einem der Ansprüche 1 bis 6. **dadurch gekennzeichnet, dass** eine/die auf die Klinke (111) wirkende Federanordung zumindest in der Deaktivierungsstellung der dritten Komponente (210) die Klinke in Richtung einer Einnahme einer Freigabestellung vorspannt, in der die Klinke (111) nicht mit der Eingriffsformation eingreift.

8. Fahrradgetriebe nach einem der Ansprüche 1 bis 7. **dadurch gekennzeichnet, dass** eine/die auf die Klinke (111) wirkende Federanordnung zumindest in der Aktivierungsstellung der dritten Komponente (210) die Klinke (111) in Richtung einer Einnahme der Eingriffsstellung vorspannt.

9. Fahrradgetriebe nach einem der Ansprüche 1 bis 8. **dadurch gekennzeichnet, dass** zumindest für wenigstens einen bestimmten momentanen Getriebezustand, bei dem die dritte Komponente (210) die Aktivierungsstellung einnimmt, die Klinke (111) in Folge einer Drehmomentübertragung über wenigstens einen anderen Drehmomentübertragungsweg (im Folgenden auch als anderer Drehmomentübertragungsweg erster Art angesprochen) aufgrund einer Wechselwirkung mit der zugeordneten Eingriffsformation in eine Überlaufstellung, in der die Klinke (111) nicht mit der Eingriffsformation drehkoppelnd eingreift, bewegbar ist.

10. Fahrradgetriebe nach einem der Ansprüche 1 bis 9, **dadurch gekennzeichnet, dass** ein anderer Drehmomentübertragungsweg bzw. der andere Drehmomentübertragungsweg (im Folgenden auch als anderer Drehmomentübertragungsweg erster Art angesprochen) die Eingangsseite (101) mit der Bremseinrichtung (206) verbindet.

11. Fahrradgetriebe nach Anspruch 10, **dadurch gekennzeichnet, dass** die dritte Komponente (210) auf Grundlage des Eingangs-Bremsdrehmoments aus der Aktivierungsstellung in die Deaktivierungsstellung verstellbar ist oder/und dass die dritte Komponente (210) auf Grundlage eines an der Eingangseite eingeleiteten Eingangs-Antriebsdrehmoments aus der Deaktivierungsstellung in die Aktivierungsstellung verstellbar ist.

12. Fahrradgetriebe nach einem der Ansprüche 1 bis 11, **dadurch gekennzeichnet, dass** die Klinke (111) auf Grundlage eines an der Ausgangsselte (202) in das Fahrradgetriebe eingeleiteten, einem Rückwärtsschieben des Fahrrads entsprechenden Drehmoments aus der Eingriffsstellung entfernbar ist.

13. Fahrradgetriebe nach Anspruch 12, **dadurch gekennzeichnet, dass** die dritte Komponente (210) auf Grundlage des an der Ausgangsseite (202) In das Fahrradgetriebe eingeleiteten, einem Rückwärtsschieben des Fahrrads entsprechenden Drehmoments aus der Aktivierungsstellung in die Deaktivierungsstellung verstellbar ist.

14. Fahrradgetriebe nach einem der Ansprüche 1 bis 13, **dadurch gekennzeichnet, dass** zumindest in der Deaktivierungsstellung der dritten Komponente (210) eine Wechselwirkung der Klinke (111) mit der zugeordneten Eingriffsformation
a) in Folge einer Drehmomentübertragung über den anderen Drehmomentübertragungsweg (hier auch als anderer Drehmomentübertragungsweg erster Art angesprochen) oder/und
b) in Folge einer Einleitung eines einem Rückwärtsschieben des Fahrrads entsprechenden Drehmoments an der Ausgangsseite (202) in das Fahrradgetriebe auf die Klinke (111) im Sinne einer Abweisung der Klinke aus der Eingriffsstellung wirkt.

15. Fahrradgetriebe nach einem der Ansprüche 1 bis 14, **dadurch gekennzeichnet, dass** zumindest in der Aktivierungsstellung der dritten Komponente die Klinke in Folge einer Drehmomentübertragung über wenigstens einen anderen Drehmomentübertragungsweg (im Folgenden auch als anderer Drehmomentübertragungsweg zweiter Art angesprochen) aufgrund einer Wechselwirkung mit der zugeordneten Eingriffsformation in eine Überlaufstellung, in der die Klinke nicht mit der Eingriffsformation drehkoppelnd eingreift, bewegbar ist.

16. Fahrradgetriebe nach einem der Ansprüche 1 bis 15, **dadurch gekennzeichnet, dass** auch wenigstens ein anderer Drehmomentübertragungsweg bzw. der andere Drehmomentübertragungsweg (im Folgenden auch als anderer Drehmomentübertragungsweg zweiter Art angesprochen) die Eingangsseite mit der Ausgangsseite verbindet.

17. Fahrradgetriebe nach einem der Ansprüche 1 bis 16, **dadurch gekennzeichnet, dass** ein/der die Ausgangsseite (101) mit der Bremseinrichtung (206) verbindende(r) Drehmomentübertragungsweg (auch als anderer Drehmomentübertragungsweg erster Art angesprochen) über wenigstens eine weitere Klinke (112) verläuft, die fürdie Drehmomentübertragung über diesen Drehmomentübertragungsweg in eine eine Drehmomentübertragung zwischen einer die Klinke tragenden, drehbar gelagerten vierten Komponente (102b, 204) des Fahrradgetriebes und einer zugeordneten, drehbar gelagerten fünften Komponente (210) des Fahrradgetriebes ermöglichende Eingriffsstellung zur Herstellung einer Drehmitnahmeverbindung durch Eingriff mit einer zugeordneten Eingriffsformation der fünften Komponente (210) bringbar ist.

18. Fahrradgetriebe nach Anspruch 17, **dadurch gekennzeichnet, dass** die weitere Klinke (112) durch eine Federanordnung in Richtung einer Einnahme der Eingriffsstellung vorgespannt ist.

19. Fahrradgetriebe nach Anspruch 17 oder 18, **dadurch gekennzeichnet, dass** die weitere Klinke (112) in Folge einer Drehmomentübertragung über den über die wenigstens einen Klinke (111) verlaufenden, die Eingangsseite mit der Ausgangsseite verbindenden Drehmomentübertragungsweg aufgrund einer Wechselwirkung mit der zugeordneten Eingriffsformation in eine Überlaufstellung, in der die Klinke (112) nicht mit der Eingriffsformation drehkoppelnd eingreift, bewegbar ist.

20. Fahrradgetriebe nach einem der vorhergehenden Ansprüche, **dadurch gekennzeichnet, dass** das Fahrradgetriebe als Mehrgang-Getriebenabe ausgeführt ist, mit einem drehbar an einer Nabenachse (107) gelagerten Antreiber (101), der als Eingangsseite (101) dient, und einer drehbar an der Nabenachse gelagerten Nabenhülse (202), die als Ausgangsseite (202) dient.

21. Fahrradgetriebe nach Anspruch 20, **dadurch gekennzeichnet, dass** der Antreiber (101) die erste Komponente (101) bildet und ein Getriebeelement (103) der Getriebeanordnung die zweite Komponente (103) bildet.

22. Fahrradgetriebe nach Anspruch 21, **dadurch gekennzeichnet, dass** ein Hohlrad (103) eines Planetengetriebes der Getriebeanordnung die zweite Komponente (103) bildet.

23. Fahrradgetriebe nach einem der Ansprüche 20 bis 22, **dadurch gekennzeichnet, dass** wenigstens ein zumindest bereichsweise radial innerhalb des Antreibers (101) angeordnetes, vermittels des Antreibers drehbar an der Nabenachse (107) gelagertes und relativ zum Antreiber zumindest über einen durch die Aktivivierungsstelluhg und die Deaktivierungsstellung begrenzten Drehwinkelbereich verdrehbares, vorzugsweise als Ringteil ausgeführtes Bauteil (210) die dritte Komponente (210) bildet.

24. Fahrradgetriebe nach Anspruch 23, **gekennzeichnet durch** wenigsten eine zwischen einem Abstützelement des Antreibers (101) und einem Abstützelement des Bauteils (210) angeordnete Druckfeder, die das Bauteil (210) relativ zum Antreiber (101) in Richtung zur Aktivierungsstellung vorspannt, die vorzugsweise **durch** einen Anschlag zwischen dem Antreiber (101) und dem Bauteil (210) definiert ist.

25. Fahrradgetriebe nach Anspruch 23 oder 24, auf Anspruch 1 rückbezogen zumindest über Anspruch 18, **dadurch gekennzeichnet, dass** von dem Bauteil (210) und einem Getriebeelement (102b, 204) der Getriebeanordnung eines die vierte Komponente (102b, 104) oder das andere die fünfte Komponente (210) bildet, wobei das Bauteil (210) zugleich einerseits die vierte bzw. die fünfte Komponente und andererseits die dritte Komponente bildet.

26. Fahrradgetriebe nach Anspruch 25, **dadurch gekennzeichnet, dass** ein Planetenradträger (102b, 204) eines/des Planetengetriebes der Getriebeanordnung die vierte bzw. die fünfte Komponente, vorzugsweise die vierte Komponente (102b, 204), bildet.

27. Fahrradgetriebe nach Anspruch 26, **dadurch gekennzeichnet, dass** zwischen dem die erste Komponente (101) bildenden Antreiber (101) und dem die dritte Komponente (210) bildenden Bauteil (210) ein derartiges Drehspiel realisiert ist, dass bei einer Rückwärtsdrehung des Antreibers die Klinke (111), über die der wenigstens eine die Eingangsseite (101) mit der Ausgangsseite (202) verbindende Drehmomentübertragungsweg verläuft, in Folge einer relativen Verdrehung des Bauteils (210) in Richtung zur Deaktivierungsstellung aus der Eingriffsstellung entfernt oder entfernbar ist, spätestens beim Einsetzen einer Rückwärtsdrehung des die zweite Komponente (103) bildenden Hohlrads (103).

## Claims

1. Bicycle gear, comprising:
- an input side (101), on which an input torque which is based on pedalling can be introduced into the bicycle gear, optionally as an input drive torque which acts in a driving direction or as an input braking torque which acts in a braking direction;
- an output side (202), on which an output drive torque which is based on the input drive torque can be provided for transmission to a drivable running wheel of a bicycle;
- a braking device (206) which is assigned to the output side and, on the basis of the input braking torque, can be brought into braking engagement which is dependent on the input braking torque, in order, via the output side (202), to provide a braking torque which is dependent on the input braking torque in order to brake the drivable running wheel;
- a gear arrangement (I, II) which preferably comprises at least one planetary gear mechanism and provides a plurality of torque transmission paths of a differing step-up transmission ratio or step-down transmission ratio between the input side (101) firstly and the output side (202) and the braking device (206) secondly; at least one torque transmission path which connects the input side (101) to the output side (202) running via at least one pawl (111),
- which pawl (111), for the transmission of torque via the said torque transmission path, can be brought into an engagement position which makes a transmission of torque possible between a rotatably mounted first component (101) of the bicycle gear which carries the pawl and an associated, rotatably mounted second component (103) of the bicycle gear, in order to establish a rotary driving connection by way of engagement with an associated engagement formation of the second component (103), and
- which pawl (111), for a transmission of torque via at least one other torque transmission path, can be removed from the engagement position on the basis of the input torque which is introduced on the input side (101) for transmission via the other torque transmission path, in order to permit a relative rotation of the two components (101, 103) at least in a relative rotational direction which occurs during a transmission of torque via the other torque transmission path;
the pawl (111) being assigned a third component (210) of the bicycle gear, which third component (210) can be adjusted relative to the first component (101) and interacts with the pawl (111) in such a way
- that, in a first position (called activation position in the following text) of the third component (210) relative to the first component (101), the pawl (111) assumes the engagement position or is at least prestressed in the direction of assuming the engagement position, and
- that the pawl (111) can be removed from the engagement position on the basis of an adjustment of the third component (210) out of the activation position into a second position (called deactivation position in the following text) relative to the first component (101);
the third component (210) having a cam face (212) which interacts with a cam follower section (214) of the pawl (111) in such a way
- that, in the case of a movement of the third component (210) out of the activation position into the deactivation position, the cam face (212) moves relative to the cam follower section (214) in such a way that the removal of the pawl (111) from the engagement position is enabled, and
- that, in the case of a movement of the third component (210) out of the deactivation position into the activation position, the pawl (111) is positively moved by way of the interaction of the cam face (212) with the cam follower section (214), in order, in the activation position of the third component (210), to assume the engagement position or at least to be prestressed in the direction of assuming the engagement position, **characterized in that**, in the activation position of the third component (210), the pawl (111) can be pivoted about a first pivot axis which is defined by the cam follower section (214) and, in the deactivation position of the third component (210), can be pivoted about a second pivot axis which is defined by a pawl section (216) which is spaced apart from the cam follower section (214).

2. Bicycle gear according to Claim 1, **characterized in that** the third component (210) is mounted on the first component (101) for joint rotation, and **in that** the third component (210) can be rotated relative to the first component (101), preferably over a limited rotary angle range.

3. Bicycle gear according to Claim 1 or 2, **characterized in that** the third component (210) is prestressed in the direction of the activation position by way of a spring arrangement (230).

4. Bicycle gear according to Claim 3, **characterized in that** the pawl (111) can be pivoted about the second pivot axis if the third component (210) assumes the deactivation position, and **in that** the pawl (111) can be pivoted about the first pivot axis if the third component (210) assumes the activation position.

5. Bicycle gear according to Claim 3 or 4, **characterized by** a spring arrangement which is assigned to the pawl and acts on the latter, which spring arrangement, in the activation position of the third component (210), prestresses the pawl (111) in the sense of pivoting it about the first pivot axis in the direction of the engagement position, and which spring arrangement, in the deactivation position of the third component (210), prestresses the pawl (111) in the sense of pivoting it about the second pivot axis in the direction of a position out of engagement with the associated engagement formation.

6. Bicycle gear according to one of Claims 1 to 5, **characterized in that** the pawl (111) can be switched by means of the third component (210) between a method of operation as a freewheel pawl which is prestressed in the direction of assuming the engagement position, and a method of operation as a pawl which is prestressed in the direction of a/the position out of engagement with the associated engagement formation.

7. Bicycle gear according to one of Claims 1 to 6, **characterized in that**, at least in the deactivation position of the third component (210), a/the spring arrangement which acts on the pawl (111) prestresses the pawl in the direction of assuming a release position, in which the pawl (111) does not engage with the engagement formation.

8. Bicycle gear according to one of Claims 1 to 7, **characterized in that**, at least in the activation position of the third component (210), a/the spring arrangement which acts on the pawl (111) prestresses the pawl (111) in the direction of assuming the engagement position.

9. Bicycle gear according to one of Claims 1 to 8, **characterized in that**, at least for at least one defined instantaneous gear state, in which the third component (210) assumes the activation position, the pawl (111) can be moved into a crossing position, in which the pawl (111) does not engage in a rotationally coupling manner with the engagement formation, as a consequence of a transmission of torque via at least one other torque transmission path (also called other torque transmission path of the first type in the following text) on account of an interaction with the associated engagement formation.

10. Bicycle gear according to one of Claims 1 to 9, **characterized in that** another torque transmission path or the other torque transmission path (also called other torque transmission path of the first type in the following text) connects the input side (101) to the braking device (206).

11. Bicycle gear according to Claim 10, **characterized in that** the third component (210) can be adjusted out of the activation position into the deactivation position on the basis of the input braking torque, and/or **in that** the third component (210) can be adjusted out of the deactivation position into the activation position on the basis of an input driving torque which is introduced on the input side.

12. Bicycle gear according to one of Claims 1 to 11, **characterized in that** the pawl (111) can be removed from the engagement position on the basis of a torque which corresponds to backward pushing of the bicycle and is introduced into the bicycle gear on the output side (202).

13. Bicycle gear according to Claim 12, **characterized in that** the third component (210) can be adjusted out of the activation position into the deactivation position on the basis of the torque which corresponds to backward pushing of the bicycle and is introduced into the bicycle gear on the output side (202).

14. Bicycle gear according to one of Claims 1 to 13, **characterized in that**, at least in the deactivation position of the third component (210), an interaction of the pawl (111) with the associated engagement formation acts on the pawl (111) in the sense of repelling the pawl out of the engagement position
a) as a consequence of a transmission of torque via the other torque transmission path (also called other torque transmission path of the first type here),
and/or
b) as a consequence of an introduction of a torque which corresponds to backward pushing of the bicycle into the bicycle gear on the output side (202).

15. Bicycle gear according to one of Claims 1 to 14, **characterized in that**, at least in the activation position of the third component, the pawl can be moved into a crossing position, in which the pawl does not engage in a rotationally coupling manner with the engagement formation, as a consequence of a transmission of torque via at least one other torque transmission path (also called other torque transmission path of the second type in the following text), on account of an interaction with the associated engagement formation.

16. Bicycle gear according to one of Claims 1 to 15, **characterized in that** at least one other torque transmission path or the other torque transmission path (also called other torque transmission path of the second type in the following text) also connects the input side to the output side.

17. Bicycle gear according to one of Claims 1 to 16, **characterized in that** a/the torque transmission path (also called other torque transmission path of the first type) which connects the output side (101) to the braking device (206) runs via at least one further pawl (112) which, for the transmission of torque via the said torque transmission path, can be brought into an engagement position which makes a transmission of torque possible between a rotatably mounted fourth component (102b, 204) of the bicycle gear which carries the pawl and an associated, rotatably mounted fifth component (210) of the bicycle gear, in order to establish a rotary driving connection by way of engagement with an associated engagement formation of the fifth component (210).

18. Bicycle gear according to Claim 17, **characterized in that** the further pawl (112) is prestressed by way of a spring arrangement in the direction of assuming the engagement position.

19. Bicycle gear according to Claim 17 or 18, **characterized in that** the further pawl (112) can be moved into a crossing position, in which the pawl (112) does not engage in a rotationally coupling manner with the engagement formation, as a consequence of a transmission of torque via the torque transmission path which runs via the at least one pawl (111) and connects the input side to the output side, on account of an interaction with the associated engagement formation.

20. Bicycle gear according to one of the preceding claims, **characterized in that** the bicycle gear is configured as a multiple-gear hub, having a driver (101) which is mounted rotatably on a hub axle (107) and serves as input side (101), and a hub sleeve (202) which is mounted rotatably on the hub axle and serves as output side (202).

21. Bicycle gear according to Claim 20, **characterized in that** the driver (101) forms the first component (101), and a gear element (103) of the gear arrangement forms the second component (103).

22. Bicycle gear according to Claim 21, **characterized in that** an internal gear (103) of a planetary gear mechanism of the gear arrangement forms the second component (103).

23. Bicycle gear according to one of Claims 20 to 22, **characterized in that** at least one component (210) which is arranged at least in regions radially within the driver (101), is mounted on the hub axle (107) such that it can be rotated by means of the driver, can be rotated relative to the driver at least over a rotary angle range which is limited by way of the activation position and the deactivation position, and is preferably configured as a ring part forms the third component (210).

24. Bicycle gear according to Claim 23, **characterized by** at least one compression spring which is arranged between a supporting element of the driver (101) and a supporting element of the component (210) and prestresses the component (210) relative to the driver (101) in the direction of the activation position which is preferably defined by way of a stop between the driver (101) and the component (210).

25. Bicycle gear according to Claim 23 or 24, referring back to Claim 1 at least via Claim 18, **characterized in that**, of the component (210) and a gear element (102b, 204) of the gear arrangement, one forms the fourth component (102b, 104) or the other forms the fifth component (210), the component (210) at the same time forming firstly the fourth or the fifth component and secondly the third component.

26. Bicycle gear according to Claim 25, **characterized in that** a planetary gear carrier (102b, 204) of a/the planetary gear mechanism of the gear arrangement forms the fourth or the fifth component, preferably the fourth component (102b, 204).

27. Bicycle gear according to Claim 26, **characterized in that** a rotary play is realized between the driver (101) which forms the first component (101) and the component (210) which forms the third component (210), which rotary play is such that, in the case of a reverse rotation of the driver, the pawl (111), via which the at least one torque transmission path which connects the input side (101) to the output side (202) runs, is removed or can be removed from the engagement position as a consequence of a relative rotation of the component (210) in the direction of the deactivation position, at the latest when a reverse rotation of the internal gear (103) which forms the second component (103) starts.

## Revendications

1. Engrenage de vélo, comprenant :
- un côté d'entrée (101), au niveau duquel un couple d'entrée issu d'un pédalage peut être introduit dans l'engrenage de vélo, au choix sous forme de couple d'entraînement d'entrée agissant dans une direction d'entraînement ou sous forme de couple de freinage d'entrée agissant dans une direction de freinage ;
- un côté de sortie (202) au niveau duquel peut être fourni un couple d'entraînement de sortie issu du couple d'entraînement d'entrée pour le transfert à une roue mobile pouvant être entraînée d'un vélo ;
- un dispositif de freinage (206) associé au côté de sortie qui peut être amené en engagement de freinage dépendant du couple de freinage d'entrée sur la base du couple de freinage d'entrée, afin de fournir par le biais du côté de sortie (202) un couple de freinage dépendant du couple de freinage d'entrée pour freiner la roue mobile pouvant être entraînée ;
- un agencement d'engrenage (I, II) comprenant au moins un engrenage planétaire, fournissant plusieurs voies de transfert de couple de multiplication ou de démultiplication différentes entre le côté d'entrée (101) d'une part et le côté de sortie (202) et le dispositif de freinage (206) d'autre part, au moins une voie de transfert de couple reliant le côté d'entrée (101) au côté de sortie (202) s'étendant sur au moins un cliquet (111),
- qui peut être amené pour le transfert de couple par le biais de cette voie de transfert de couple dans une position d'engagement permettant un transfert de couple entre un premier composant (101) de l'engrenage de vélo portant le cliquet, supporté à rotation, et un deuxième composant associé (103) de l'engrenage de vélo, supporté à rotation, en vue d'établir une liaison d'entraînement en rotation par engagement avec une formation d'engagement associée du deuxième composant (103), et
- qui peut être enlevé de la position d'engagement en vue d'un transfert de couple par le biais d'au moins une autre voie de transfert de couple sur la base du couple d'entrée introduit au niveau du côté d'entrée (101) pour le transfert par le biais de l'autre voie de transfert de couple, afin de permettre une rotation relative des deux composants (101, 103) au moins dans une direction de rotation relative se produisant dans le cas d'un transfert de couple par le biais de l'autre voie de transfert de couple ;
au cliquet (111) étant associé un troisième composant (210) de l'engrenage de vélo pouvant être déplacé par rapport au premier composant (101), qui coopère avec le cliquet (111) de telle sorte
- que dans une première position du troisième composant (210) par rapport au premier composant (101), désignée ci-dessous par position d'activation, le cliquet (111) adopte la position d'engagement ou soit au moins précontraint dans la direction de l'adoption de la position d'engagement, et
- que le cliquet (111), sur la base d'un déplacement du troisième composant (210) hors de la position d'activation dans une deuxième position par rapport au premier composant (101), désignée ci-dessous par position de désactivation, puisse être enlevé de la position d'engagement ;
le troisième composant (210) présentant une surface de came (212) qui coopère avec une portion de suiveur de came (214) du cliquet (111) de telle sorte
- que dans le cas d'un déplacement du troisième composant (210) hors de la position d'activation dans la position de désactivation, la surface de came (212) se déplace par rapport à la portion de suiveur de came (214) de telle sorte que l'enlèvement du cliquet (111) hors de la position d'engagement soit libéré, et
- que, dans le cas d'un déplacement du troisième composant (210) hors de la position de désactivation dans la position d'activation par coopération de la surface de came (212) avec la portion de suiveur de came (214), le cliquet (111) soit déplacé de force afin d'adopter la position d'engagement dans la position d'activation du troisième composant (210) ou au moins d'être précontraint dans la direction de l'adoption de la position d'engagement,
**caractérisé en ce que**
le cliquet (111), dans la position d'activation du troisième composant (210), peut pivoter autour d'un premier axe de pivotement défini par la portion de suiveur de came (214) et, dans la position de désactivation du troisième composant (210), peut pivoter autour d'un deuxième axe de pivotement qui est défini par une portion de cliquet (216) espacée de la portion de suiveur de came (214).

2. Engrenage de vélo selon la revendication 1, **caractérisé en ce que** le troisième composant (210) est supporté sur le premier composant (101) en vue d'une rotation commune, et **en ce que** le troisième composant (210) peut tourner par rapport au premier composant (101), de préférence sur une plage de rotation angulaire limitée.

3. Engrenage de vélo selon la revendication 1 ou 2, **caractérisé en ce que** le troisième composant (210) est précontraint par un agencement de ressort (230) dans la direction de la position d'activation.

4. Engrenage de vélo selon la revendication 3, **caractérisé en ce que** le cliquet (111) peut pivoter autour du deuxième axe de pivotement lorsque le troisième composant (210) adopte la position de désactivation, et **en ce que** le cliquet (111) peut pivoter autour du premier axe de pivotement lorsque le troisième composant (210) adopte la position d'activation.

5. Engrenage de vélo selon la revendication 3 ou 4, **caractérisé par** un agencement de ressort associé au cliquet, agissant sur celui-ci, qui précontraint le cliquet (111) dans la position d'activation du troisième composant (210) dans le sens d'un pivotement autour du premier axe de pivotement dans la direction de la position d'engagement et qui précontraint le cliquet (111) dans la position de désactivation du troisième composant (210) dans le sens d'un pivotement autour du deuxième axe de pivotement dans la direction d'une position hors d'engagement avec la formation d'engagement associée.

6. Engrenage de vélo selon l'une quelconque des revendications 1 à 5, **caractérisé en ce que** le cliquet (111) peut être commuté au moyen du troisième composant (210) entre un mode d'action en tant que cliquet de roue libre qui est précontraint dans la direction de l'adoption de la position d'engagement, et un mode d'action en tant que cliquet précontraint dans la direction d'une/de la position hors d'engagement avec la formation d'engagement associée.

7. Engrenage de vélo selon l'une quelconque des revendications 1 à 6, **caractérisé en ce qu'**un/l'agencement de ressort agissant sur le cliquet (111), au moins dans la position de désactivation du troisième composant (210), précontraint le cliquet dans la direction de l'adoption d'une position de libération dans laquelle le cliquet (111) ne s'engage pas avec la formation d'engagement.

8. Engrenage de vélo selon l'une quelconque des revendications 1 à 7, **caractérisé en ce qu'**un/l'agencement de ressort agissant sur le cliquet (111), au moins dans la position d'activation du troisième composant (210), précontraint le cliquet (111) dans la direction de l'adoption de la position d'engagement.

9. Engrenage de vélo selon l'une quelconque des revendications 1 à 8, **caractérisé en ce qu'**au moins pour au moins un état instantané déterminé de l'engrenage, dans lequel le troisième composant (210) adopte la position d'activation, le cliquet (111), suite à un transfert de couple par le biais d'au moins une autre voie de transfert de couple (ci-après également appelée autre voie de transfert de couple du premier type), peut être déplacé sur la base d'une interaction avec la formation d'engagement associée, dans une position de dépassement dans laquelle le cliquet (111) ne s'engage pas avec la formation d'engagement par accouplement en rotation.

10. Engrenage de vélo selon l'une quelconque des revendications 1 à 9, **caractérisé en ce qu'**une autre voie de transfert de couple, ou l'autre voie de transfert de couple (ci-après également appelée autre voie de transfert de coupe du premier type), relie le côté d'entrée (101) au dispositif de freinage (206).

11. Engrenage de vélo selon la revendication 10, **caractérisé en ce que** le troisième composant (210) peut être déplacé sur la base du couple de freinage d'entrée depuis la position d'activation dans la position de désactivation et/ou **en ce que** le troisième composant (210) peut être déplacé sur la base d'un couple d'entraînement d'entrée introduit au niveau du côté d'entrée depuis la position de désactivation dans la position d'activation.

12. Engrenage de vélo selon l'une quelconque des revendications 1 à 11, **caractérisé en ce que** le cliquet (111), sur la base d'un couple introduit au niveau du côté de sortie (202) dans l'engrenage de vélo, correspondant à un mouvement de recul du vélo, peut être enlevé de la position d'engagement.

13. Engrenage de vélo selon la revendication 12, **caractérisé en ce que** le troisième composant (210), sur la base du couple introduit au niveau du côté de sortie (202) dans l'engrenage de vélo, correspondant à un mouvement de recul du vélo, peut être déplacé de la position d'activation dans la position de désactivation.

14. Engrenage de vélo selon l'une quelconque des revendications 1 à 13, **caractérisé en ce qu'**au moins dans la position de désactivation du troisième composant (210), une interaction du cliquet (111) avec la formation d'engagement associée agit sur le cliquet (111) dans le sens d'un repoussement du cliquet hors de la position d'engagement
a) suite à un transfert de couple par le biais de l'autre voie de transfert de couple (ici également appelée autre voie de transfert de couple du premier type)
et/ou
b) suite à l'introduction d'un couple correspondant à un déplacement de recul du vélo au niveau du côté de sortie (202) dans l'engrenage de vélo.

15. Engrenage de vélo selon l'une quelconque des revendications 1 à 14, **caractérisé en ce qu'**au moins dans la position d'activation du troisième composant, le cliquet, suite à un transfert de couple par le biais d'au moins une autre voie de transfert de couple (ci-dessous également appelée autre voie de transfert de couple du deuxième type), sur la base d'une interaction avec la formation d'engagement associée, peut être déplacé dans une position de dépassement dans laquelle le cliquet ne s'engage pas avec la formation d'engagement par accouplement en rotation.

16. Engrenage de vélo selon l'une quelconque des revendications 1 à 15, **caractérisé en ce qu'**au moins une autre voie de transfert de couple ou l'autre voie de transfert de couple (ci-après également appelée autre voie de transfert de couple du deuxième type) relie également le côté d'entrée au côté de sortie.

17. Engrenage de vélo selon l'une quelconque des revendications 1 à 16, **caractérisé en ce qu'**une/la voie de transfert de couple reliant le côté de sortie (101) au dispositif de freinage (206) (également désignée par autre voie de transfert de couple du premier type) s'étend sur au moins un cliquet supplémentaire (112) qui, pour le transfert de couple par le biais de cette voie de transfert de couple, peut être amené dans une position d'engagement permettant un transfert de couple entre un quatrième composant (102b, 204) de l'engrenage de vélo, supporté à rotation, portant le cliquet et un cinquième composant associé (210) de l'engrenage de vélo, supporté à rotation, pour établir une liaison d'entraînement en rotation par engagement avec une formation d'engagement associée du cinquième composant (210).

18. Engrenage de vélo selon la revendication 17, **caractérisé en ce que** le cliquet supplémentaire (112) est précontraint par un agencement de ressort dans la direction de l'adoption de la position d'engagement.

19. Engrenage de vélo selon la revendication 17 ou 18, **caractérisé en ce que** le cliquet supplémentaire (112) peut être déplacé du fait d'un transfert de couple par le biais de la voie de transfert de couple s'étendant sur l'au moins un cliquet (111), reliant le côté d'entrée au côté de sortie, sur la base d'une interaction avec la formation d'engagement associée, dans une position de dépassement dans laquelle le cliquet (112) ne s'engage pas avec la formation d'engagement par accouplement en rotation.

20. Engrenage de vélo selon l'une quelconque des revendications précédentes, **caractérisé en ce que** l'engrenage de vélo est réalisé sous forme de moyeu d'engrenage à plusieurs rapports, avec un mécanisme d'entraînement (101) supporté à rotation sur un axe de moyeu (107), qui sert de côté d'entrée (101) et une douille de moyeu (202) supportée à rotation sur l'axe de moyeu, qui sert de côté de sortie (202).

21. Engrenage de vélo selon la revendication 20, **caractérisé en ce que** le mécanisme d'entraînement (101) forme le premier composant (101) et un élément d'engrenage (103) de l'agencement d'engrenage forme le deuxième composant (103).

22. Engrenage de vélo selon la revendication 21, **caractérisé en ce qu'**une couronne dentée (103) d'un engrenage planétaire de l'agencement d'engrenage forme le deuxième composant (103).

23. Engrenage de vélo selon l'une quelconque des revendications 20 à 22, **caractérisé en ce qu'**au moins un composant (210) disposé au moins en partie radialement à l'intérieur du mécanisme d'entraînement (101) supporté à rotation par le biais du mécanisme d'entraînement sur l'axe de moyeu (107), réalisé de préférence sous forme de pièce annulaire, et pouvant tourner par rapport au mécanisme d'entraînement au moins sur une plage de rotation angulaire limitée par la position d'activation et la position de désactivation, forme le troisième composant (210).

24. Engrenage de vélo selon la revendication 23, **caractérisé par** au moins un ressort de compression disposé entre un élément de support du mécanisme d'entraînement (101) et un élément de support du composant (210), qui précontraint le composant (210) par rapport au mécanisme d'entraînement (101) dans la direction de la position d'activation, qui est définie de préférence par une butée entre le mécanisme d'entraînement (101) et le composant (210).

25. Engrenage de vélo selon la revendication 23 ou 24, rapportées à la revendication 1 au moins par le biais de la revendication 18, **caractérisé en ce que** parmi le composant (210) et un élément d'engrenage (102b, 204) de l'agencement d'engrenage, l'un forme le quatrième composant (102b, 104) ou l'autre forme le cinquième composant (210), le composant (210) formant en même temps d'une part le quatrième, respectivement le cinquième, composant et d'autre part le troisième composant.

26. Engrenage de vélo selon la revendication 25, **caractérisé en ce qu'**un porte-satellites (102b, 204) d'un/de l'engrenage planétaire de l'agencement d'engrenage forme le quatrième, respectivement le cinquième, composant, de préférence le quatrième composant (102b, 204).

27. Engrenage de vélo selon la revendication 26, **caractérisé en ce qu'**entre le mécanisme d'entraînement (101) formant le premier composant (101) et le composant (210) formant le troisième composant (210), est réalisé un jeu à rotation tel que dans le cas d'une rotation vers l'arrière du mécanisme d'entraînement, le cliquet (111), sur lequel s'étend l'au moins une voie de transfert de couple reliant le côté d'entrée (101) au côté de sortie (202), du fait d'une rotation relative du composant (210) dans la direction de la position de désactivation, est enlevé ou peut être enlevé de la position d'engagement, au plus tard lors de l'établissement d'une rotation vers l'arrière de la couronne dentée (103) formant le deuxième composant (103).
